# EUROPEAN PATENT SPECIFICATION

(11) **EP 3 056 061 B1**
(45) Date of publication and mention of the grant of the patent: **26.06.2019**
(21) Application number: 14852691.6
(22) Date of filing: 30.09.2014
(51) Int. Cl.: G06F 3/0488, G06F 3/0484, G06F 3/0482

(54) **MOBILE TERMINAL**
MOBILES ENDGERÄT
TERMINAL MOBILE

(30) Priority: 08.10.2013 KR 20130119984; 08.10.2013 KR 20130119985; 15.11.2013 KR 20130139286
(43) Date of publication of application: 17.08.2016
(73) Proprietor: LG Electronics Inc., Seoul 150-721 (KR)
(72) Inventor: KIM, Sangwon, Seoul 137-893 (KR); CHOI, Yunsun, Seoul 137-893 (KR); KIM, Ahreum, Seoul 137-893 (KR); SONG, Kibong, Seoul 137-893 (KR)
(74) Representative: Beyer, Andreas
(86) International application number: PCT/KR2014/009207
(87) International publication number: WO 2015/053506

(56) References cited:
- EP-A2- 2 284 675
- KR-A- 20130 038 753
- US-A1- 2011 191 704
- US-A1- 2013 021 273
- US-A1- 2013 058 019
- Paul Horowitz: "View Browsing History on iPhone, iPad, iPod touch from Safari", , 23 February 2013 (2013-02-23), XP055393999, Retrieved from the Internet: URL:http://osxdaily.com/2013/02/27/browsin g-history-iphone-ipad/ [retrieved on 2017-07-26]

## Description

### Technical Field

The present invention relates to a mobile terminal capable of sensing a touch applied thereto and a control method thereof.

### Background Art

Terminals may be divided into a mobile terminal and stationary terminal according to whether or not terminals are movable. In addition, mobile terminals may be divided into a handheld terminal and a vehicle mount terminal according to whether or not users can directly carry it around.

As such functions become more diversified, the mobile terminal may support more complicated functions such as capturing images or video, reproducing music or video files, playing games, receiving broadcast signals, and the like. By comprehensively and collectively implementing such functions, the mobile terminal may be embodied in the form of a multimedia player or device.

In order to implement complicated functions of a multimedia device, various attempts have been made in terms of hardware or software. For example, a user interface environment allowing users to easily or conveniently search or select functions is provided.

Meanwhile, with functions of portable electronic complicated, users undergo many discomforts in using functions of portable electronic devices. In order to resolve such discomforts, it is required to provide a more intuitive interface to users.

A user intuitive interface may include an interface through a touch. Thus, the development of various interfaces through touches may be required.

Document US 2011/191704 A1 relates to techniques involving gestures and other functionality as inputs to a computing device. In this regard, said document discloses input of a gesture using first, second and third stages. In the first stage, an image is displayed on the computing device and in the second stage, a frame is drawn using a stylus. A fill gesture is recognized in the third stage. Due to the recognized fill gesture, the image is filled into the frame to form an additional image. This additional image may be stretched to fit into the frame.

Further state of the art is defined by Paul Horowitz: "View Browsing History on iPhone, iPad, iPod touch from Safari", XP055393999.

Document EP2284678 A2 discloses a method for controlling a mobile terminal including comparing and selecting pictures.

### Disclosure of Invention

### Technical Problem

Therefore, an object of the present invention is to provide a method for controlling screen information output to a display unit by using a multi-touch input.

### Solution to Problem

According to an aspect of the present invention, there is provided a mobile terminal according to independent claim 1. The dependent claims describe preferred embodiments. Embodiments which to not fall under the scope of the claims do not describe part of the invention. The mobile terminal includes: a display unit configured to output a graphic object; a sensing unit configured to sense a touch input applied to the display unit; and a controller configured to, when a first touch input applied to the display unit and a second touch input different from the first touch input are sensed in a state in which the first touch input is maintained, output at least one different graphic object related to a graphic object maintained to be output to at least one region of the display unit, in response to the second touch input in a state in which output of the graphic object to the region to which the first touch input has been applied is maintained.

In an exemplary embodiment of the present invention, when the first and second touch inputs are sensed, the controller may divide the display unit into a plurality of regions, and the graphic object, which has been output to the region to which the first touch input has been applied, may be output to a first region among the plurality of regions and a graphic object different from the graphic object may be output to a second region among the plurality of regions.

In an exemplary embodiment of the present invention, when the second touch input is applied again to the display unit, a graphic object different from the graphic object output to the second region may be output to the second region in response to the second touch input which has been applied again.

In an exemplary embodiment of the present invention, the first and second touch inputs may be different types of touch input, and after the display unit is divided into a plurality of regions on the basis of the sensed first and second touch inputs, when the second touch input is applied to the first region in a state in which the first touch input has been applied to the second region, the graphic object output to the second region may be maintained to be output by the first touch input and the graphic object output to the first region may be changed to a different graphic object related to the graphic object output to the second region.

In an exemplary embodiment of the present invention, when the graphic object output to the first region is magnified according to at least one touch applied to the first region, the controller may magnify the graphic object of the second region in response to the magnifying of the graphic object output to the first region.

In an exemplary embodiment of the present invention, the display unit may include a plurality of graphic objects, and the controller may fix an output position of the graphic object to which the first touch input is applied, among the plurality of graphic objects on the basis of the applied first and second touch inputs, and change an output position of a graphic object, excluding the graphic object whose output position is fixed, on the basis of the applied second touch input.

In an exemplary embodiment of the present invention, when the output position of the graphic object is changed according to the second touch input, the controller may make at least one of the plurality of graphic objects output to the display unit disappear from the display unit, and output at least one new graphic object which has not been output to the display unit in response to the disappearance of the at least one graphic object.

In an exemplary embodiment of the present invention, the graphic objects may be provided as plural, and the controller may set at least two graphic objects, among the plurality of graphic objects as a group according to a user selection, and output the graphic objects included in the set group among the plurality of objects to the display unit.

In an exemplary embodiment of the present invention, the group may be set by a third touch input different from the first and second touch inputs with respect to the plurality of graphic objects.

In an exemplary embodiment of the present invention, the graphic objects included in the set group may exist in the display unit, and when first and second touch inputs applied to the graphic objects included in the set group are sensed, the controller may maintain output of the graphic object to which the first touch input has been applied among the graphic objects included in the set group, and output a graphic object other than the graphic object to which the first touch input has been applied among the graphic objects set as the group.

There is provided a mobile terminal including: a display unit configured to output a plurality of function keys associated with operations of the mobile terminal; and a controller configured to, when a first corresponding to a pre-set scheme is applied to any one of the plurality of function keys, process an operation of the mobile terminal related to the function key to which the first touch has been applied, wherein the controller outputs information related to the any one function key to which the first touch has been applied to a region of the display unit, and when a second touch, different from the first touch, is applied to the output information in a state in which the first touch is maintained, the controller executes a function corresponding to the information to which the second touch has been applied.

When the first touch is released, the information related to the any one function key is not output any longer.

Screen information related to an operation of the mobile terminal may be output to the display unit, and the information related to the any one function key may be output to a region of the screen information related to an operation of the mobile terminal in an overlapping manner.

When a second touch is applied to the information related to the any one function key, the controller may execute a function corresponding to the information related to the any one function key, and output an executed screen of the function corresponding to the information related to the any one function key to the display unit.

Information related to the any one key may be plural, and a list corresponding to the plurality of pieces of information may be output to the display unit, and when a second touch is applied to the list, at least one of addition of items constituting the list, deletion of items constituting the list, and merging of items constituting the list may be changed.

Screen information associated with an operation of the mobile terminal may be output to the display unit, and when a second touch is applied to the screen information, the controller may add the screen information to the list.

In a case in which a Web browser operates in the mobile terminal and a Web browser executed screen is output to the display unit, when a first touch is applied to any one key having a function of returning to a previous screen of the currently output Web browser screen among the plurality of function keys, information related to the function key to which the first touch has been applied may be Web browser history information.

In a state in which the first touch is maintained, when a second touch is applied to the history information, the mobile terminal may access a Web site corresponding to the selected history information and an executed screen of the Web site may be output to the display unit.

In a case in which a Web browser application operates and a Web browser executed screen is output to the display unit, when a first touch is applied to any one key having a bookmark function storing addresses of Web sites that a user frequently visits among the plurality of function keys, information related to the function key to which the first touch has been applied may be bookmark information.

There is provided a method for controlling a mobile terminal, including: outputting a plurality of function keys associated with operations of the mobile terminal to a display unit; applying a pre-set type first touch to any one of the plurality of function keys; outputting information related to the any one function key to which the first touch is applied to a region of the display unit; and in a state in which the first touch is maintained, executing a function corresponding to the output information when a second touch different from the first touch is applied to the output information.

### Advantageous Effects of Invention

According to the exemplary embodiment of the present invention, in a state in which a graphic object output to one region of the display unit by using a multi-touch input applied to the display unit is maintained, a graphic object related to the graphic object may be output to another region of the display unit. Thus, the user may compare the graphic objects output to the two regions.

Also, according to an exemplary embodiment of the present invention, in the display unit including a plurality of graphic objects, in a state in which an output position of any one of a plurality of graphic objects is fixed, output positions of the other graphic objects may be changed. Thus, the user may change output of the other remaining graphic objects, while maintaining output of the desired graphic object.

In the mobile terminal according to an exemplary embodiment of the present invention, in the case in which the entire front surface is configured as a display unit, a plurality of function keys associated with operations of the mobile terminal may be output to a region of the display unit, whereby the user may use the plurality of function keys by associating them with screen information output to the display unit.

### Brief Description of Drawings

FIG. 1 is a block diagram of a mobile terminal disclosed in the present disclosure.
FIG. 2A is a front perspective view of the mobile terminal according to an exemplary embodiment of the present invention.
FIG. 2B is a rear perspective view of the mobile terminal according to an exemplary embodiment of the present invention.
FIG. 3 is a flow chart illustrating a method for controlling output of a graphic object to a display unit by using a multi-touch in the mobile terminal according to an exemplary embodiment of the present invention.
FIG. 4 is a conceptual view illustrating the control method of FIG. 3.
FIGS. 5A and 5B are conceptual views illustrating changing of a graphic object by a second touch.
FIG. 6 is a conceptual view illustrating changing of a graphic object whose output is fixed to the display unit.
FIGS. 7A through 7C are conceptual views illustrating a method for editing graphic objects output to first and second regions.
FIGS. 8A and 8B are conceptual views illustrating a method for controlling output of a plurality of graphic objects.
FIGS. 9A and 9B are conceptual views illustrating a method for grouping at least a portion of a plurality of graphic objects.
FIGS. 10A and 10B are conceptual views illustrating a method for using grouped graphic objects.
FIG. 11 is a conceptual view illustrating a method for controlling a display unit on which a camera application is being executed.
FIG. 12 is a perspective view of a mobile terminal whose entire front surface is covered with a display unit according to an illustration example.

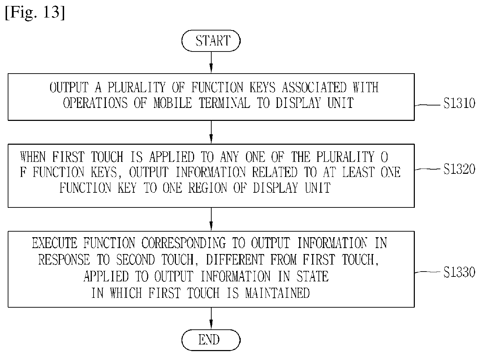

FIG. 13 is a flow chart illustrating a control method using a plurality of function keys in the mobile terminal having the entire front surface covered with the display unit according to an illustration example.
FIGS. 14A and 14B are conceptual views illustrating the control method of FIG. 13.
FIG. 15 is a conceptual view illustrating a way to determine whether to output information according to whether a first touch is sensed.
FIGS. 16A through 16C are conceptual views illustrating a method for controlling in formation output by a second touch.
FIG. 17 is a conceptual view illustrating a method for editing an output memo in the mobile terminal in which a memo application is executed.

### Best Mode for Carrying out the Invention

The mobile terminal according to exemplary embodiments of the present invention will now be described with reference to the accompanying drawings. In the following description, usage of suffixes such as 'module', 'part' or 'unit' used for referring to elements is given merely to facilitate explanation of the present invention, without having any significant meaning by itself. Accordingly, the 'module' and 'part' may be mixedly used.

Mobile terminals described in the present invention may include mobile phones, smart phones, notebook computers, digital broadcast receivers, PDAs (Personal Digital Assistants), PMPs (Portable Multimedia Player), navigation devices, and the like.

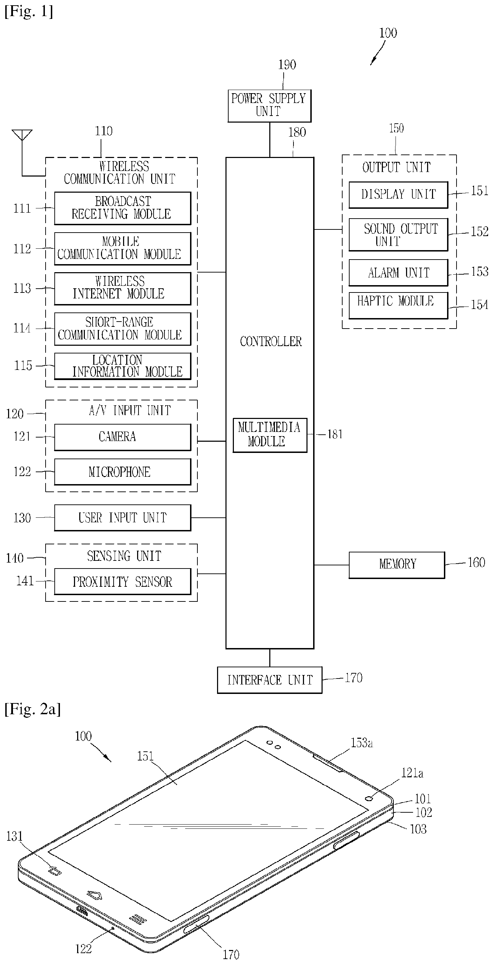

FIG. 1 is a block diagram of a mobile terminal according to an embodiment of the present invention.

The mobile terminal 100 may include a wireless communication unit 110, an A/V (Audio/Video) input unit 120, a user input unit 130, a sensing unit 140, an output unit 150, a memory 160, an interface unit 170, a controller 180, and a power supply unit 190, etc. FIG. 1 shows the mobile terminal as having various components, but it should be understood that implementing all of the illustrated components is not a requirement. Greater or fewer components may alternatively be implemented.

The elements of the mobile terminal will be described in detail as follows.

The wireless communication unit 110 typically includes one or more components allowing radio communication between the mobile terminal 100 and a wireless communication system or a network in which the mobile terminal is located. For example, the wireless communication unit may include at least one of a broadcast receiving module 111, a mobile communication module 112, a wireless Internet module 113, a short-range communication module 114, and a location information module 115.

The broadcast receiving module 111 receives broadcast signals and/or broadcast associated information from an external broadcast management server via a broadcast channel.

The broadcast channel may include a satellite channel and/or a terrestrial channel. The broadcast management server may be a server that generates and transmits a broadcast signal and/or broadcast associated information or a server that receives a previously generated broadcast signal and/or broadcast associated information and transmits the same to a terminal. The broadcast signal may include a TV broadcast signal, a radio broadcast signal, a data broadcast signal, and the like. Also, the broadcast signal may further include a broadcast signal combined with a TV or radio broadcast signal.

The broadcast associated information may also be provided via a mobile communication network and, in this case, the broadcast associated information may be received by the mobile communication module 112.

The broadcast signal may exist in various forms. For example, it may exist in the form of an electronic program guide (EPG) of digital multimedia broadcasting (DMB), electronic service guide (ESG) of digital video broadcast-handheld (DVB-H), and the like.

The broadcast receiving module 111 may be configured to receive signals broadcast by using various types of broadcast systems. In particular, the broadcast receiving module 111 may receive a digital broadcast by using a digital broadcast system such as multimedia broadcasting-terrestrial (DMB-T), digital multimedia broadcasting-satellite (DMB-S), digital video broadcast-handheld (DVB-H), the data broadcasting system known as media forward link only (MediaFLO®), integrated services digital broadcast-terrestrial (ISDB-T), etc. The broadcast receiving module 111 may be configured to be suitable for every broadcast system that provides a broadcast signal as well as the above-mentioned digital broadcast systems.

Broadcast signals and/or broadcast-associated information received via the broadcast receiving module 111 may be stored in the memory 160.

The mobile communication module 112 transmits and/or receives radio signals to and/or from at least one of a base station (e.g., access point, Node B, etc.), an external terminal and a server. Such radio signals may include a voice call signal, a video call signal or various types of data according to text and/or multimedia message transmission and/or reception.

The wireless Internet module 113 supports wireless Internet access for the mobile terminal. This module may be internally or externally coupled to the terminal. The wireless Internet access technique implemented may include a WLAN (Wireless LAN) (Wi-Fi), Wibro (Wireless broadband), Wimax (World Interoperability for Microwave Access), HSDPA (High Speed Downlink Packet Access), or the like.

The short-range communication module 114 is a module for supporting short range communications. Some examples of short-range communication technology include BluetoothTM, Radio Frequency IDentification (RFID), Infrared Data Association (IrDA), Ultra-WideBand (UWB), ZigBeeTM, and the like.

The location information module 115 is a module for acquiring a location of the mobile terminal. A typical example of the location information module is a GPS (Global Positioning System).

Referring to FIG. 1, the A/V input unit 120 is configured to receive an audio or video signal. The A/V input unit 120 may include a camera 121 and a microphone 122. The camera 121 processes image data of still pictures or video obtained by an image capture device in a video capturing mode or an image capturing mode. The processed image frames may be displayed on a display unit 151.

The image frames processed by the camera 121 may be stored in the memory 160 (or other storage medium) or transmitted via the wireless communication unit 110. Two or more cameras 121 may be provided according to the configuration of the mobile terminal.

The microphone 122 may receive sounds (audible data) via a microphone in a phone call mode, a recording mode, a voice recognition mode, and the like, and can process such sounds into audio data. The processed audio (voice) data may be converted for output into a format transmittable to a mobile communication base station via the mobile communication module 112 in case of the phone call mode. The microphone 122 may implement various types of noise canceling (or suppression) algorithms to cancel (or suppress) noise or interference generated in the course of receiving and transmitting audio signals.

The user input unit 130 may generate input data from commands entered by a user to control various operations of the mobile terminal. The user input unit 130 may include a keypad, a dome switch, a touch pad (e.g., a touch sensitive member that detects changes in resistance, pressure, capacitance, etc. due to being contacted), a jog wheel, a jog switch, and the like.

The sensing unit 140 detects a current status of the mobile terminal 100 such as an opened or closed state of the mobile terminal 100, a location of the mobile terminal 100, the presence or absence of user contact with the mobile terminal 100 (i.e., touch inputs), the orientation of the mobile terminal 100, an acceleration or deceleration movement and direction of the mobile terminal 100, etc., and generates commands or signals for controlling the operation of the mobile terminal 100. For example, when the mobile terminal 100 is implemented as a slide type mobile phone, the sensing unit 140 may sense whether the slide phone is opened or closed. In addition, the sensing unit 140 can detect whether or not the power supply unit 190 supplies power or whether or not the interface unit 170 is coupled with an external device. The sensing unit 140 may include a proximity sensor 141.

The output unit 150 is configured to provide outputs in a visual, audible, and/or tactile manner (e.g., audio signal, video signal, alarm signal, vibration signal, etc.). The output unit 150 may include the display unit 151, an audio output module 152, an alarm unit 153, a haptic module 154, and the like.

The display unit 151 may display information processed in the mobile terminal 100. For example, when the mobile terminal 100 is in a phone call mode, the display unit 151 may display a User Interface (UI) or a Graphic User Interface (GUI) associated with a call or other communication (such as text messaging, multimedia file downloading, etc.). When the mobile terminal 100 is in a video call mode or image capturing mode, the display unit 151 may display a captured image and/or received image, a UI or GUI.

The display unit 151 may include at least one of a liquid crystal display (LCD), a thin film transistor-LCD (TFT-LCD), an organic light emitting diode (OLED) display, a flexible display, a three-dimensional (3D) display, or the like.

Some of them may be configured to be transparent or light-transmissive to allow viewing of the exterior, which may be called transparent displays. A typical transparent display may be, for example, a TOLED (Transparent Organic Light Emitting Diode) display, or the like. Through such configuration, the user can view an object positioned at the rear side of the terminal body through the region occupied by the display unit 151 of the terminal body.

The mobile terminal 100 may include two or more display units according to its particular desired embodiment. For example, a plurality of display units may be separately or integrally disposed on one surface of the mobile terminal, or may be separately disposed on mutually different surfaces.

Meanwhile, when the display unit 151 and a sensor (referred to as a 'touch sensor', hereinafter) for detecting a touch operation are overlaid in a layered manner to form a touch screen, the display unit 151 may function as both an input device and an output device. The touch sensor may have a form of a touch film, a touch sheet, a touch pad, and the like.

The touch sensor may be configured to convert pressure applied to a particular portion of the display unit 151 or a change in the capacitance or the like generated at a particular portion of the display unit 151 into an electrical input signal. The touch sensor may be configured to detect the pressure when a touch is applied, as well as the touched position and area.

When there is a touch input with respect to the touch sensor, a corresponding signal (signals) are transmitted to a touch controller. The touch controller processes the signals and transmits corresponding data to the controller 180. Accordingly, the controller 180 may recognize which portion of the display unit 151 has been touched.

With reference to FIG. 1, a proximity sensor 141 may be disposed within or near the touch screen. The proximity sensor 141 is a sensor for detecting the presence or absence of an object relative to a certain detection surface or an object that exists nearby by using the force of electromagnetism or infrared rays without a physical contact. Thus, the proximity sensor 141 has a considerably longer life span compared with a contact type sensor, and it can be utilized for various purposes.

Examples of the proximity sensor 141 may include a transmission type photoelectric sensor, a direct reflection type photoelectric sensor, a mirror-reflection type photoelectric sensor, an RF oscillation type proximity sensor, a capacitance type proximity sensor, a magnetic proximity sensor, an infrared proximity sensor, and the like. In case where the touch screen is the capacitance type, proximity of the pointer is detected by a change in electric field according to the proximity of the pointer. In this case, the touch screen (touch sensor) may be classified as a proximity sensor.

In the following description, for the sake of brevity, recognition of the pointer positioned to be close to the touch screen will be called a 'proximity touch', while recognition of actual contacting of the pointer on the touch screen will be called a 'contact touch'. In this case, when the pointer is in the state of the proximity touch, it means that the pointer is positioned to correspond vertically to the touch screen.

By employing the proximity sensor 141, a proximity touch and a proximity touch pattern (e.g., a proximity touch distance, a proximity touch speed, a proximity touch time, a proximity touch position, a proximity touch movement state, or the like) can be detected, and information corresponding to the detected proximity touch operation and the proximity touch pattern can be outputted to the touch screen.

The audio output module 152 may convert and output as sound audio data received from the wireless communication unit 110 or stored in the memory 160 in a call signal reception mode, a call mode, a record mode, a voice recognition mode, a broadcast reception mode, and the like. Also, the audio output module 152 may provide audible outputs related to a particular function performed by the mobile terminal 100 (e.g., a call signal reception sound, a message reception sound, etc.). The audio output module 152 may include a speaker, a buzzer, or other sound generating device.

The alarm unit 153 may provide outputs to inform about the occurrence of an event of the mobile terminal 100. Typical events may include call reception, message reception, key signal inputs, a touch input etc. In addition to audio or video outputs, the alarm unit 153 may provide outputs in a different manner to inform about the occurrence of an event. For example, the alarm unit 153 may provide an output in the form of vibrations. When a call, a message, or some other incoming communication is received, the alarm unit 153 may provide tactile outputs (i.e., vibrations) to inform the user thereof. By providing such tactile outputs, the user can recognize the occurrence of various events even if his mobile phone is in the user's pocket. Outputs informing about the occurrence of an event may be also provided via the display unit 151 or the audio output module 152. The display unit 151 and the audio output module 152 may be classified as a part of the alarm unit 153.

The haptic module 154 generates various tactile effects the user may feel. A typical example of the tactile effects generated by the haptic module 154 is vibration. The strength and pattern of the haptic module 154 can be controlled. For example, different vibrations may be combined to be outputted or sequentially outputted.

Besides vibration, the haptic module 154 may generate various other tactile effects such as an effect by stimulation such as a pin arrangement vertically moving with respect to a contact skin, a spray force or suction force of air through a jet orifice or a suction opening, a contact on the skin, a contact of an electrode, electrostatic force, etc., an effect by reproducing the sense of cold and warmth using an element that can absorb or generate heat.

The haptic module 154 may be implemented to allow the user to feel a tactile effect through a muscle sensation such as fingers or arm of the user, as well as transferring the tactile effect through a direct contact. Two or more haptic modules 154 may be provided according to the configuration of the mobile terminal 100.

The memory 160 may store software programs used for the processing and controlling operations performed by the controller 180, or may temporarily store data (e.g., a phonebook, messages, still images, video, etc.) that are inputted or outputted. In addition, the memory 160 may store data regarding various patterns of vibrations and audio signals outputted when a touch is inputted to the touch screen.

The memory 160 may include at least one type of storage medium including a Flash memory, a hard disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, and an optical disk. Also, the mobile terminal 100 may be operated in relation to a web storage device that performs the storage function of the memory 160 over the Internet.

The interface unit 170 serves as an interface with every external device connected with the mobile terminal 100. For example, the external devices may transmit data to an external device, receives and transmits power to each element of the mobile terminal 100, or transmits internal data of the mobile terminal 100 to an external device. For example, the interface unit 170 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various types of information for authenticating the authority of using the mobile terminal 100 and may include a user identity module (UIM), a subscriber identity module (SIM) a universal subscriber identity module (USIM), and the like. In addition, the device having the identification module (referred to as 'identifying device', hereinafter) may take the form of a smart card. Accordingly, the identifying device may be connected with the terminal 100 via a port.

When the mobile terminal 100 is connected with an external cradle, the interface unit 170 may serve as a passage to allow power from the cradle to be supplied therethrough to the mobile terminal 100 or may serve as a passage to allow various command signals inputted by the user from the cradle to be transferred to the mobile terminal therethrough. Various command signals or power inputted from the cradle may operate as signals for recognizing that the mobile terminal is properly mounted on the cradle.

The controller 180 typically controls the general operations of the mobile terminal. For example, the controller 180 performs controlling and processing associated with voice calls, data communications, video calls, and the like. The controller 180 may include a multimedia module 181 for reproducing multimedia data. The multimedia module 181 may be configured within the controller 180 or may be configured to be separated from the controller 180.

The controller 180 may perform a pattern recognition processing to recognize a handwriting input or a picture drawing input performed on the touch screen as characters or images, respectively.

The power supply unit 190 receives external power or internal power and supplies appropriate power required for operating respective elements and components under the control of the controller 180.

Various embodiments described herein may be implemented in a computer-readable or its similar medium using, for example, software, hardware, or any combination thereof.

For hardware implementation, the embodiments described herein may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic units designed to perform the functions described herein. In some cases, such embodiments may be implemented by the controller 180 itself.

For software implementation, the embodiments such as procedures or functions described herein may be implemented by separate software modules. Each software module may perform one or more functions or operations described herein.

Software codes can be implemented by a software application written in any suitable programming language. The software codes may be stored in the memory 160 and executed by the controller 180.

The mobile terminal according to an embodiment of the present invention described above with reference to FIG. 1, the mobile terminal in which components of the mobile terminal are disposed, or the structure of the mobile terminal will be described.

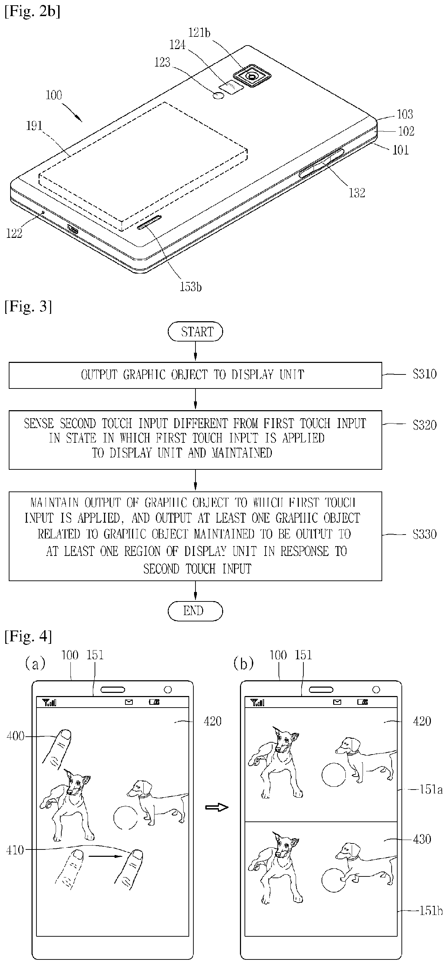

FIG. 2A is a front perspective view of the mobile terminal according to an embodiment of the present invention, and FIG. 2B is a rear perspective view of the mobile terminal illustrated in FIG. 2A.

The disclosed mobile terminal has a bar type terminal body. However, the present invention is not limited thereto and may be applicable to various structures such as a slide type mobile terminal, a folder type mobile terminal, a swing type mobile terminal, a swivel type mobile terminal, etc, in which two or more bodies are combined to be relatively movable.

As illustrated, the terminal body 100 (referred to as 'body', hereinafter) includes a front surface, a lateral surface, and a rear surface. Also, the body includes both ends formed in a length direction.

The body includes a case (or casing, housing, cover, etc.) constituting the external appearance. In this embodiment, the case may include a front case 101 and a rear case 102. Various electronic components are installed in the space between the front case 101 and the rear case 102. One or more intermediate cases may be additionally disposed between the front case 101 and the rear case 102.

The cases may be formed by injection-molding a synthetic resin or may be made of a metallic material such as stainless steel (STS) or titanium (Ti), etc.

The display unit 151, the audio output module 152, the camera 121, the user input unit 130/131, 132, the microphone 122, the interface unit 170, etc. may be disposed mainly on the front case 101 of the terminal body 100.

The display unit 151 occupies the most of a main surface of the front case 101. The audio output unit 151 and the camera 121 are disposed at a region adjacent to one end portion among both end portions of the display unit 151, and the user input unit 131 and the microphone 122 are disposed at a region adjacent to another end portion. The user input unit 132 and the interface unit 170 may be disposed at the sides of the front case 101 and the rear case 102. The microphone 122 may be disposed on the other end of the body 100.

The user input unit 130 is manipulated to receive a command for controlling the operation of the mobile terminal 100 and may include a plurality of manipulation units 131 and 132. The manipulation units 131 and 132 may be generally referred to as a manipulating portion, and various methods and techniques can be employed for the manipulation portion so long as they can be operated by the user in a tactile manner.

Content inputted by the first and second manipulation units 131 and 132 can be variably set. For example, the first manipulation unit 131 may receive a command such as starting, ending, scrolling, etc., and the second manipulation unit 132 may receive a command such as controlling of the size of a sound outputted from the audio output unit 152 or conversion into a touch recognition mode of the display unit 151.

With reference to FIG. 2B, an audio output unit 152' may be additionally disposed on the rear surface of the terminal body. The audio output module 152' may implement stereophonic sound functions in conjunction with the audio output module 152 (See FIG. 2A) and may be also used for implementing a speaker phone mode for call communication.

The power supply unit 190 for supplying power to the mobile terminal 100 is mounted on the terminal body. The power supply unit 190 may be installed within the terminal body or may be directly attached to or detached from the exterior of the terminal body.

A touch pad 135 for detecting a touch may be additionally mounted on the rear case 102. The touch pad 135 may be configured to be light transmissive like the display unit 151. In this case, when the display unit 151 is configured to output visual information from both sides thereof, the visual information may be recognized also via the touch pad 135. Alternatively, a display may be additionally mounted on the touch pad so that a touch screen may be disposed on the rear case 102.

A camera 121' may additionally be disposed on the rear case 102 of the terminal body. The camera 121' may have an image capture direction which is substantially opposite to that of the camera 121 (See FIG. 2a), and have a different number of pixels than the camera 121.

For example, the camera 121 may have a smaller number of pixels to capture an image of the user's face and transmit such image to another party, and the camera 121' may have a larger number of pixels to capture an image of a general object and not immediately transmit it in most cases. The cameras 121 and 121' may be installed on the terminal body such that they can be rotatable or popped up.

A flash 123 and a mirror 124 may be additionally disposed adjacent to the camera 121'. When an image of a subject is captured with the camera 121', the flash 123 illuminates the subject. The mirror 124 allows the user to see himself when he wants to capture his own image (i.e., self-image capturing) by using the camera 121'.

An audio output unit 252' may be additionally disposed on the rear surface of the terminal body. The audio output unit 252' may implement a stereoscopic function along with the audio output module 22 (See FIG. 2A), and may be used for implementing a speaker phone mode during call communication.

A power supply unit 190 for supplying power to the mobile terminal 100 may be installed on the terminal body. The power supply unit 190 may be installed in the terminal body or may be directly detached from the outside of the terminal body.

A touch pad 135 for detecting a touch may be additionally mounted on the rear case 102. Such a touch pad 135 may be configured to be light-transmissive like the display unit 151. In this case, when the display unit 151 is configured to output visual information from both surfaces thereof, the visual information may be recognized also through the touch pad 135. The information output to the both surfaces of the display unit 151 may be controlled by the touch pad 135. Also, a display unit may be additionally mounted on the touch pad 135, so a touch screen may be disposed on the rear case 102.

Also, the mobile terminal according to an exemplary embodiment of the present invention that may include one or more of the components as described above may execute various control functions by using a multi-touch input.

Hereinafter, a method for controlling output of a graphic object output to the display unit on the basis of a touch input will be described. FIG. 3 is a flow chart illustrating a method for controlling output of a graphic object to a display unit on the basis of an applied touch input, and FIG. 4 is a conceptual view illustrating the control method of FIG. 3.

The mobile terminal according to an exemplary embodiment of the present invention may output a graphic object to the display unit (S310).

Graphic objects related to various functions operating in the mobile terminal may be output to the display unit 151. The graphic objects may be various images that may be output to the display unit 151. For example, in a case in which a home screen page is output to the display unit 151, the graphic objects may be icons, widgets, and the like, corresponding to applications included in the home screen page. In another example, in a case in which a gallery application related to an image file is being executed, the graphic objects may be image files.

Meanwhile, in a state in which a first touch is applied to and maintained in the display unit, the mobile terminal according to an exemplary embodiment of the present invention may sense a second touch input, different from the first touch, applied thereto (S320).

The mobile terminal according to an exemplary embodiment of the present invention may further include the sensing unit 140 for sensing a touch input applied to the display unit 151. Here, the sensing unit 140 may be configured as a touch sensor. A touch input sensed by the sensing unit 14 may be various types of touch input. For example, the touch input may be a short touch, a long touch, a double touch, drag, flicking, and the like.

Meanwhile, the sensing unit 140 may sense a multi-touch input. The multi-touch input refers to at least to touch inputs that are simultaneously applied. For example, the multi-touch input may include a first touch input and a second touch input. Here, the first and second touch inputs may be different types of touch input. For example, the first touch input may be a long-touch input, while the second touch input may be a flocking input.

On the basis of the sensed multi-touch input, the controller 180 may execute a function corresponding to the multi-touch input. For example, when the multi-touch input is sensed, the controller 180 may control output of the graphic object output to the display unit 151.

Meanwhile, when the first and second touch inputs are sensed, the mobile terminal according to an exemplary embodiment of the present invention may maintain output of the graphic object to which the first touch input has been applied and output of at least one graphic object related to the graphic object maintained to be output to at least one region of the display unit in response to the second touch input (S330).

When the first and second touch inputs applied to the display unit are simultaneously sensed, the controller may control an output state of the graphic object output to the display unit 151 on the basis of the first and second touch inputs. Here, the output state may refer to maintaining output or not maintaining output. Also, the output state may refer to changing of a shape, color, position, and the like, of the graphic object.

In an exemplary embodiment of the present invention, when the first and second inputs are applied, the controller 180 may control the display unit 151 to maintain output of the graphic object or not to maintain the output. For example, in a state in which the first touch input is applied and maintained, the sensing unit 140 may sense the second touch input different from the first touch input. Here, in the case in which the second touch is sensed in the state in which the first touch input is sensed, the controller 180 may maintain the output of the graphic object output to the display unit 151 in response to the maintained first touch input. Also, the controller 180 may output at least one graphic object related to the graphic object currently maintained to be output to the display unit 151 in response to the sensed second touch input.

Here, in the case in which the first and second touch inputs are applied, the controller 180 may divide the display unit 151 into a plurality of regions. For example, the plurality of regions may include a first region and a second region. In this case, the graphic object maintained to be output may be output to the first region, and the at least one graphic object related to the graphic object maintained to be output may be output to the second region.

The first region and second region may be divided according to various methods. For example, the first and second regions may be divided according to a user selection or may be divided according to a pre-set method. Here, when the first and second regions are divided according to a user selection, the user may select any one of a plurality of previously stored methods, and may divide the regions by a touch input. Here, the method for dividing the regions by a user's touch input, the regions may be divided on the basis of a touch trace corresponding to the user's touch input. For example, in a case in which the user applies an input of dragging to the center of the display unit 151 in a horizontal direction, regions may be divided according to a trace corresponding to the drag.

The graphic object that may be output to the second region may be at least one graphic object related to the graphic object maintained to be output. Here, the graphic object related to the graphic object maintained to be output may be set by various references.

Here, the various references may be previously set. For example, the various references may refer to whether the at least one graphic object belongs to the same group, whether the at least one graphic object satisfies a pre-set reference, whether the at least one graphic object is of the same type.

For example, when the graphic object is an image, the various references may be an image capture time of the image or an image capture position of the image. In an exemplary embodiment, in a case in which the same object is imaged several times, the relevant graphic object may be a plurality of images captured for a pre-set period of time.

In another example, in a case in which a plurality of images are stored in the memory of the mobile terminal, the relevant graphic object may be determined by using an image recognition function. For example, in a case in which any one of the plurality of images is set as a graphic object maintained to be output by the first touch input, when any one of the other remaining images, rather than the any one image, is determined as an image which is identical at a predetermined level or higher through the image recognition function, it may be determined as a graphic object related to the graphic object maintained to be output.

Meanwhile, the graphic object output to the second region may be related to the graphic object being output to the first region, but it is not necessarily limited thereto. In this case, various graphic objects other than the graphic object related to the graphic object output to the first region may be output to the first region.

Also, although not shown, the display unit 151 may not be necessarily divided into a plurality of regions. In this case, at least one graphic object output according to the second touch input may be output to overlap with the graphic object maintained to be output by the first touch input.

Hereinbefore, the method for controlling an output state of the graphic object output to the display unit according to a pre-set type touch input applied to the display unit has been described. Hereinafter, a method for controlling the output state will be described in more detail with reference to the accompanying drawings.

On the basis of a multi-touch input applied to the display unit 151, the controller 180 may control an output state of a graphic object output to the display unit 151.

For example, referring to (a) of FIG. 4, an image file may be displayed on the display unit 151. In this case, the user may apply a first touch input to the display unit 151. For example, the first touch input may be a long-touch input.

While the first touch input is being maintained, the user may apply a second touch input, different from the first touch input, to a region of the display unit 151. For example, in a case in which the first touch input is a long-touch, the second touch input may be a flicking input different from the long touch input.

In a case in which the second touch input is sensed, the controller 180 may execute a function corresponding to the second touch input. For example, the function corresponding to the second touch input may be a function of outputting a graphic object which has not been output to the display unit 151.

In an exemplary embodiment, the controller 180 may output at least one graphic object related to the graphic object maintained to be output by the first touch input to at least one region of the display unit 151 according to the second touch input.

In this case, the controller 180 may divide the display unit into a plurality of regions. For example, the plurality of regions may include a first region 151a and a second region 151b.

In an exemplary embodiment of the present invention, referring to (b) of FIG. 4, in the case in which the display unit is divided into the first region 151a and the second region 151b, a graphic object maintained to be output may be output to the first region and at least one graphic object related to the graphic object maintained to be output may be output to the second region. In this case, the at least one graphic object related to the graphic object maintained to be output may similar to the graphic object maintained to be output. For example, referring to (b) of FIG. 4, an image similar to the image maintained to be output may be output to the second region.

Meanwhile, although not shown, only a single related image may be output as illustrated in (b) of FIG. 4, or a plurality of relevant images may also be simultaneously output. Here, the output number of relevant images may be set by the user or may be set in advance. Also, the second region may be divided into a plurality of regions according to the number of the relevant images.

Hereinabove, the method for outputting at least one different graphic object related to the graphic object maintained to be output, while maintaining output of the graphic object output to the display unit, on the basis of the first touch input and the second touch input applied to the display unit 151 has been described. In this manner, the user may compare a plurality of graphic objects at a glance.

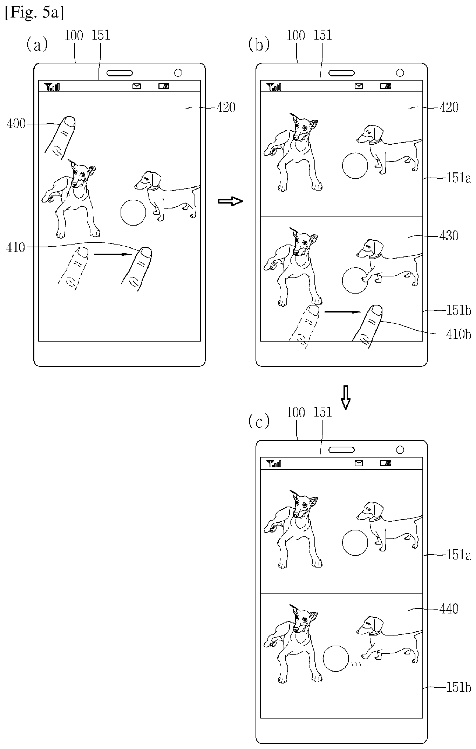

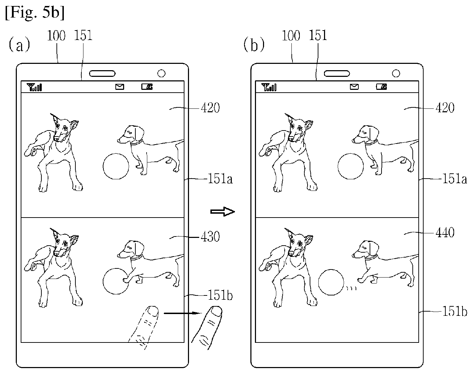

Hereinafter, a method for outputting a graphic object by a touch input will be described in detail. FIGS. 5A and 5B are conceptual views illustrating a method for controlling each region in a case in which the display unit is divided into a plurality of regions.

The mobile terminal according to an exemplary embodiment of the present invention may control output of a graphic object output to the display unit 151 on the basis of sensed multi-touch input applied thereto. For example, referring to (a) of FIG. 5A, a first touch input and a second touch input may be applied to the display unit 151. Here, the controller 180 may maintain output of the graphic object output to the display unit 151 on the basis of the first touch input, and may output at least one different graphic object related to the graphic object maintained to be output to at least one region of the display unit 151 on the basis of the second touch input.

When the first and second touch inputs are applied, the controller 180 may divide the display unit 151 into a plurality of regions as illustrated in (b) of FIG. 5A. For example, the display unit 151 may be divided into a first region 151a and a second region 151b. Here, the graphic object maintained to be output may be output to the first region 151a, and the graphic object related to the graphic object maintained to be output may be output to the second region 151b.

Thereafter, the second touch input may be applied again to the second region 151b. In this case, the controller 180 may change the graphic object being output to the second region 151b to a different graphic object. Here, the graphic object output to the first region 151a may be continuously maintained to be output. The different graphic object output to the second region may be a graphic object related to the graphic object maintained to be output to the first region 151a. For example, as illustrated in (c) of FIG. 5A, the different graphic object may be an image related to the image maintained to be output.

Meanwhile, although not shown, the first touch input may be continuously maintained in the first region. For example, in the case of (b) of FIG. 5A, the user may continuously maintain the first touch input in the first region. In this case, the output of the graphic object to the first region may be maintained only while the first touch input is maintained.

Also, the controller 180 may delete the graphic object from the memory unit, as well as outputting the graphic object, on the basis of a direction of the second touch input. For example, in a case in which the second touch input is a drag input moving from within the region of the display unit 151 to the outside of the display unit 151, the controller 180 may delete the graphic object to which the second touch input has been applied.

In an exemplary embodiment, referring to (a) of FIG. 5B, the controller 180 may maintain outputting of a graphic object to which a first touch input has been applied. Here, the user may apply a second touch input to a graphic object 430 other than the graphic object 420 to which the first touch input has been applied. For example, the second touch input may be a drag input moving from within the region of the display unit 151 to the outside of the display unit 151.

In the case in which the second touch input is applied, the controller 180 may not output the graphic object 430 to which the second touch input has been applied, any longer. In this case, the graphic object 430 to which the second touch input has been applied may be deleted from the memory.

In the case in which the graphic object 430 is deleted, as illustrated in (b) of FIG. 5B, the controller 180 may output a graphic object 440, which is related to the graphic object maintained to be output and which is different from the deleted graphic object, to the region from which the deleted graphic object 430 was deleted.

Hereinabove, changing of the graphic object output to the second region in the case in which the display unit 151 is divided into a plurality of regions and the second touch input is applied to the second region has been described. In this manner, the user may change the graphic object in the second region, while maintaining output of the graphic object output to the first region, and compare the graphic object output to the first region with a plurality of graphic objects.

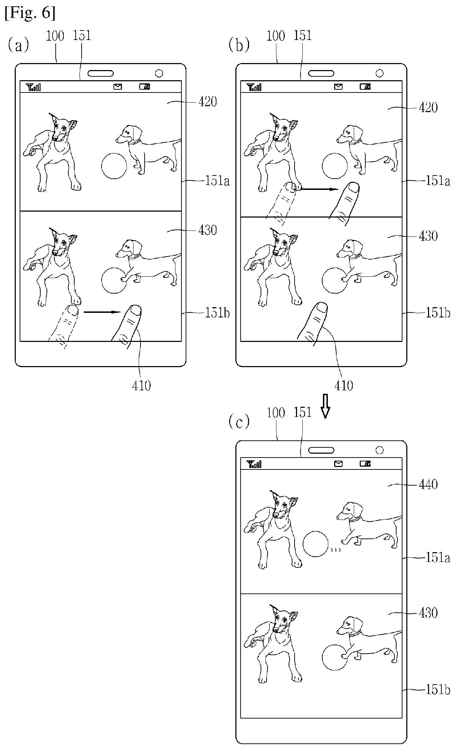

Hereinafter, a method for changing a graphic object maintained to be output will be described. FIG. 6 illustrates a method for changing a graphic object maintained to be output when a touch input is sensed.

The controller 180 may divide the display unit 180 into a plurality of regions on the basis of first and second touch inputs as applied. For example, as illustrated in (a) of FIG. 6, the display unit 151 may be divided into a first region 151a and a second region 151b. Here, a graphic object 420 maintained to be output is output to the first region 151a and a graphic object 430 related to the graphic object 420 maintained to be output to the first region may be output to the second region 151b. Here, the graphic object 430 output to the second region may be changed to a different graphic object according to a second touch input applied to the second region 151b. The different graphic object may be related to the graphic object maintained to be output to the first region.

Here, as illustrated in (b) of FIG. 6, the user may apply the first touch input to the second region 151b. Also, in a state in which the first touch input applied to the second region 151b is maintained, the user may apply the second touch input to the first region 151a. In this case, while the output of the graphic object 430 output to the second region 151b is maintained, the output of the graphic object 420 output to the first region 151a may be changed. For example, a graphic object 440 related to the graphic object maintained to be output to the second region 151b may be output to the first region 151a.

In this manner, the user may change the graphic object maintained to be output by using a touch input.

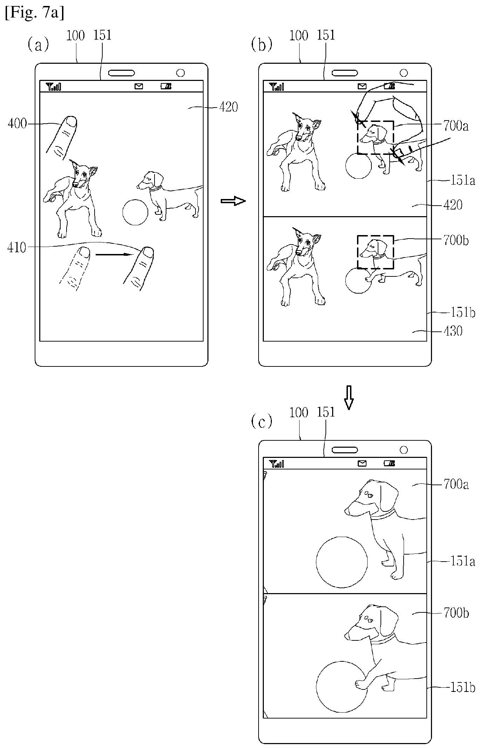

Hereinafter, a method for controlling a plurality of graphic objects simultaneously by applying at least one touch input to any one region in a case in which graphic objects each are output to the display unit divided into a plurality of regions will be described. FIGS. 7A through 7C are conceptual views illustrating a method for controlling a plurality of graphic objects output to the display unit.

The controller 180 may divide the display unit into a plurality of regions according to a multi-touch input (a first touch input and a second touch input that are simultaneously applied). Here, the display unit 151 may be divided into a first region 151a and a second region 151b.

Also, the controller 180 may output relevant graphic objects to the first and second regions, respectively. For example, the graphic objects output to the first region and the second region may be images obtained by imaging the same object.

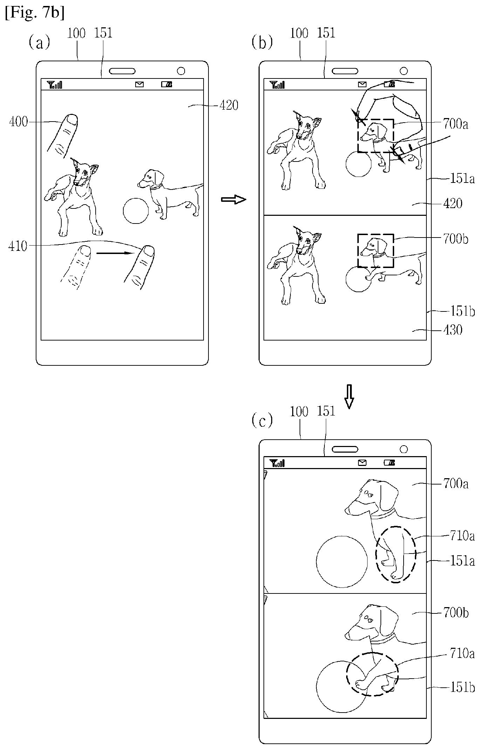

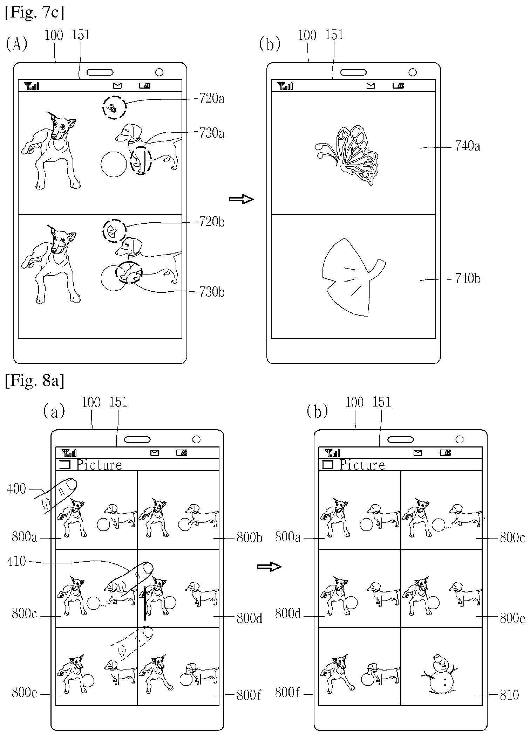

Here, in order to edit the graphic object output to the first region 151a, the user may apply at least one touch input. The at least one touch input may be a pinch-in input, a pinch-out input, a double-touch input, or a drag input. For example, as illustrated in (b) of FIG. 7, at least one touch input may be a pinch-in input.

When the at least one touch input is applied, the controller 180 may execute an editing function corresponding to the at least one touch input. The editing function may include magnifying, reducing, cutting, pasting, and position-moving of the graphic object output to the display unit. For example, the editing function corresponding to the at least one touch input may be a function of magnifying the graphic object output to the region to which the at least one touch input is applied.

Meanwhile, the at least one touch input may be applied to any one region among the first region 151a and the second region 151b. Here, the controller 180 may apply the editing function corresponding to the at least one touch input, also to the graphic object output to the region (e.g., the second region) to which the at least one touch input was not applied, as well as to the region (e.g., the first region) to which the at least one touch input has been applied.

For example, referring to (b) of FIG. 7A, the user may apply a pinch-in input to the first region. Here, as illustrated in (c) of FIG. 7A, the controller 180 may magnify a graphic object 700a output to the first region 151a. Also, the controller 180 may magnify a graphic object 700b of the second region 151b corresponding to the magnified graphic object 700a.

Although not shown, the controller 180 may output guide images to respective regions such that graphic objects output to the plurality of regions of the display unit 151 can be conveniently compared. The guide images may be a line images partitioned by a grid.

Also, when the graphic objects are magnified, the controller 180 may recognize at least one region in which the other remaining graphic objects are different from any one graphic object based on the any one graphic object among the magnified graphic objects. In an exemplary embodiment, in order to recognize the one at least one different region, the controller 180 may use an image recognition function.

When the at least one different region is recognized, the controller 180 may output notification information indicating the at least one different region to the plurality of graphic objects. For example, the notification information may be a circular indicator in the different region.

For example, as illustrated in (c) of FIG. 7B, regions of two graphic objects output to the display unit 15 are magnified, the controller 180 may detect different image regions in the magnified regions 700a and 700b by using an image recognition function. In this case, the controller 180 may output circular indicators 710a and 710b to different image regions.

Meanwhile, when a plurality of images are output to the display unit 151, the controller 180 may detect at least one different image region by using the image recognition function with respect to the plurality of graphic objects output to the display unit 151.

For example, as illustrated in (a) of FIG. 7C, two graphic objects may be output to the display unit 151. In this case, the controller 180 may detect at least one different image region 720a, 720b, 730a, and 730b by using the image recognition function with respect to the two graphic objects.

When the at least one different image region 720a, 720b, 730a, and 730b is detected, the controller 180 may output notification information regarding the at least one different image region 720a, 720b, 730a, and 730b as illustrated in (a) of FIG. 7C. In this case, the user may apply a touch input to at least one image region 720a among the at least one image region 720a, 720b, 730a, and 730b.

When the touch input is applied, the controller 180 may magnify the region 720 to which the touch input has been applied, and output the same 720a and 720b. In this case, the touch input may be applied to any one 720a of the two graphic objects 720a and 720b. In this case, when a touch input is applied to any one 720a of the two graphic objects 720a and 720b, the controller 180 may magnify the region 720a of the graphic object to which the touch input has been applied and the region 720b of the graphic object to which the touch input has not been applied corresponding to the region of the graphic object to which the touch input has been applied, and output the same.

For example, as illustrated in (b) of FIG. 7C, the user may apply a touch input to any one graphic object 720a among the two graphic objects 720a nad 720b. In this case, the controller 180 may magnify both the region 720a of the graphic object to which the touch input has been applied and the region 720b of the graphic object to which the touch input has not been applied corresponding to the region of the graphic object to which the touch input has been applied, and output the same 740a and 740b.

Hereinbefore, the method for editing graphic objects output to the plurality of regions has been described. In this manner, the user may edit the other remaining graphic object by editing one graphic object.

Also, in the exemplary embodiment of the present disclosure, when the plurality of graphic objects are output, different image regions may be detected and information regarding the detection results may be provided to the user. Thus, the user may compare the plurality of graphic objects more conveniently and by intuition.

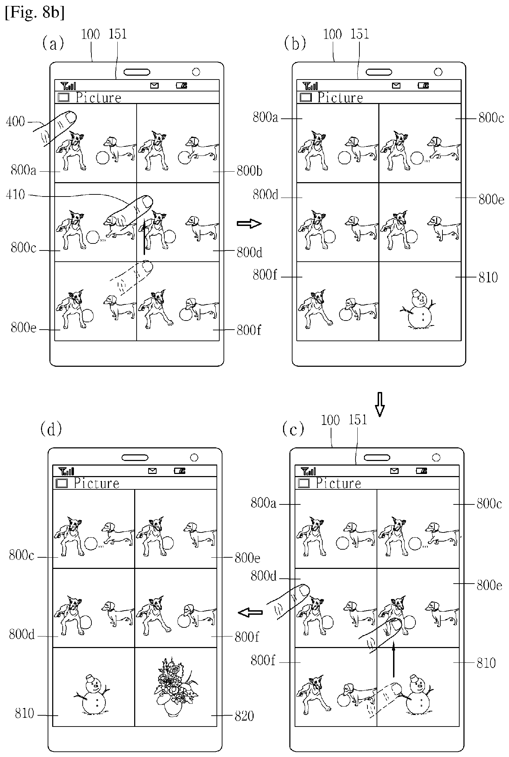

Hereinafter, a method for controlling a plurality of graphic objects output to the display unit will be described. FIGS. 8A and 8B are conceptual views illustrating cases in which a plurality of graphic objects are output as a list to the display unit.

The controller 180 may change output states of the plurality of graphic objects according to first and second touch inputs applied to the display unit. For example, while maintaining an output position of a graphic object output to a region to which the first touch input has been applied, among the plurality of graphic objects, the controller 180 may change an output position of a graphic object other than the graphic object whose output position is maintained.

In an exemplary embodiment of the present invention, referring to (a) of FIG. 8A, a plurality of graphic objects 800a, 800b, 800c, 800d, 800e, and 800f may be displayed on the display unit 151. Here, a first touch input may be applied to any one 800a of the plurality of graphic objects 800a, 800b, 800c, 800d, 800e, and 800f. In a state in which the first touch input is maintained, a second touch input may be applied to the display unit 151. In this case, the controller 180 may fix the output position of the graphic object 800a to which the first touch input has been applied, and change the output positions of the graphic objects 800a, 800c, 800d, 800e, and 800f other than the graphic object whose output position has been fixed, among the plurality of graphic objects.

Here, referring to (b) of FIG. 8A, it can be seen that output positions of the graphic objects other than the graphic object whose output position is fixed has been changed. Here, at least one graphic object 800b, among the plurality of graphic objects other than the graphic object whose output position has been fixed may not be output any longer. At the same time, at least one graphic object 810 which has not been output to the display unit 151, may be output.

Meanwhile, the graphic object whose output position has been fixed may be changed. For example, in (a) and (b) of FIG. 8B, it can be seen that the output position of the first graphic object 800a is fixed. Here, as illustrated in (c) of FIG. 8B, the user may apply a first touch input to a third graphic object 800d. In a state in which the first touch input applied to the third graphic object is maintained, the user may apply a second touch input to the display unit 151. In this case, the controller 180 may fix the output position of the third graphic object 800d to which the first touch input has been applied. Also, the controller 180 may change the output positions of the graphic objects 800a, 800c, 800e, and 800f other than the third graphic object 800d whose output position has been fixed.

Meanwhile, the method for changing output positions of the plurality of graphic objects may be performed in pre-set order. For example, as illustrated in FIG. 8A, in a case in which the second touch input is a flicking input of moving from a lower end to an upper end of the display unit, the positions of the plurality of graphic objects may be moved in a direction corresponding to the second touch input.

Hereinbefore, the method for controlling output states of respective graphic objects when the plurality of graphic objects are output has been described. In this manner, the user may change output positions of the other remaining graphic objects, while fixing an output position of his or her desired graphic object, among the plurality of graphic objects.

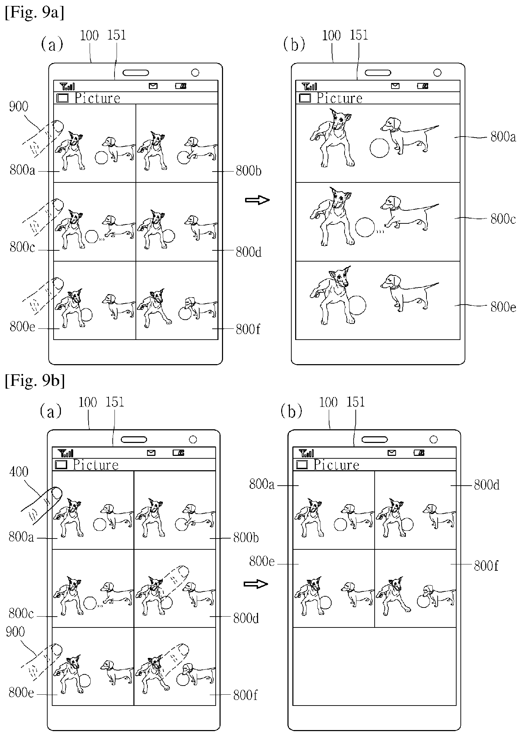

Hereinafter, a method for selectively grouping a plurality of graphic objects will be described. FIGS. 9A and 9B illustrate a method for grouping at least a portion of the plurality of graphic objects.

In order to select a comparison target among the plurality of graphic objects 800a, 800b, 800c, 800d, 800e, and 800f output to the display unit 151, the controller 180 may group at least a portion of the graphic objects. In this case, the user may select graphic objects to be grouped from among the plurality of graphic objects. The graphic objects to be grouped may be selected by applying a touch input different from the first and second touch inputs. For example, the third touch input may be a short-touch input different from the first and second touch inputs.

Referring to FIG. 9A, the user may select at least a portion 800a, 800c, and 800e of the plurality of graphic objects 800a, 800b, 800c, 800d, 800e, and 800f output to the display unit 151 by applying the third touch input. When the selecting is completed, the controller 180 may output only the selected graphic objects 800a, 800c, and 800e to the display unit 151 as illustrated in (b) of FIG. 9.

As another method for grouping at least a portion of a plurality of graphic objects, there may be a method using a multi-touch as illustrated in FIG. 9B. For example, as illustrated in (a) of FIG. 9B, the user may apply a first touch into to any one 800a of a plurality of graphic objects 800a, 800b, 800c, 800d, 800e, and 800f. Thereafter, the user may apply a third touch input to at least a portion 800d, 800e, and 800f of the other remaining graphic objects. In this case, in a state in which the first touch input is maintained, the controller 180 may group the graphic objects 800d, 800e, and 800f to which the first and third touch inputs have been applied on the basis of the applied third touch input. Thereafter, as illustrated in (b) of FIG. 9B, the controller 180 may output only the grouped graphic objects 800d, 800e, and 800f, among the plurality of graphic objects.

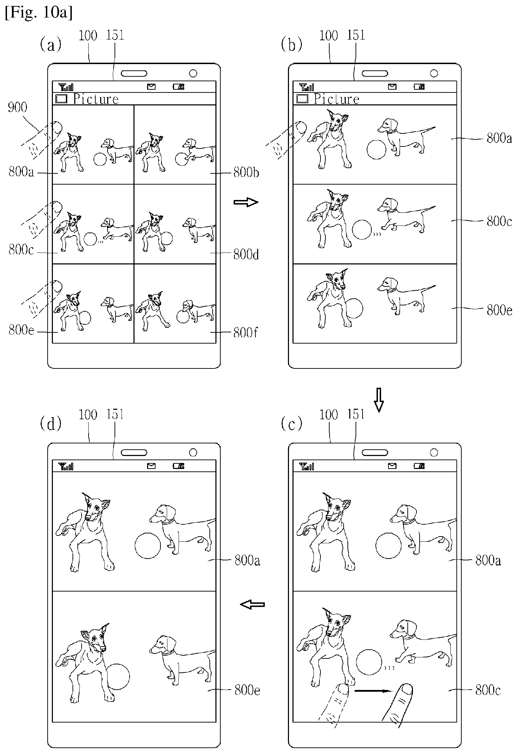

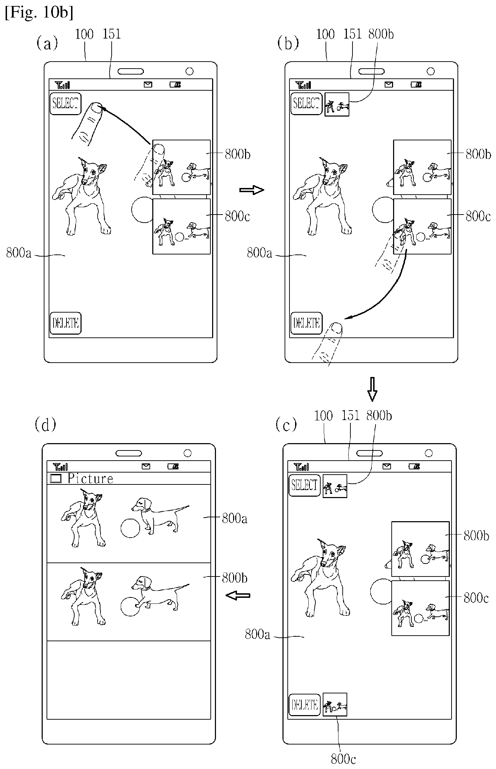

Hereinbefore, the method for grouping a plurality of graphic objects has been described. Hereinafter, a method of using the grouped graphic objects will be described in detail. FIGS. 10A and 10B are conceptual views illustrating a method for controlling grouped graphic objects.

Referring to (a) and (b) of FIG. 10A, the controller 180 may group at least a portion of the plurality of graphic objects 800a, 800b, 800c, 800d, 800e, and 800f. In this case, only the grouped graphic objects 800a, 800c, and 800e may be output to the display unit 151.

The user may apply a first touch input to any one of the graphic objects output to the display unit 151. In this case, in a state in which the first touch input is maintained, when a second touch input is applied, the display unit 151 may be divided into a plurality of regions including a first region 151a and a second region 151b as illustrated in (c) of FIG. 10A. In this case, in an exemplary embodiment of the present invention, the graphic object 800a positioned in a region to which the first touch input has been applied may be output to the first region 151a, and any one of the grouped graphic objects 800a, 800c, and 800e may be output to the second region 151b.

Thereafter, the user may apply a second touch input again to the second region 151b. In this case, as illustrated in (d) of FIG. 10A, the controller 180 may output graphic objects 800c and 800e, which has not been output, among the grouped graphic objects 800a, 800c, and 800e to the display unit. Namely, the controller 180 may output only the grouped graphic object as a relevant graphic object.

In another example, as illustrated in (a) of FIG. 10B, when the selecting of the group is completed, the controller 180 may output any one 800a of the graphic objects 800a, 800b, and 800c belonging to the group to the entire surface of the display unit 15 and output the other remaining graphic objects 800b and 800c belonging to the group to one region of the display unit 151.

Thereafter, the controller 180 may delete or store the graphic object by using a touch input applied by the user to the graphic object. For example, as illustrated in (b) of FIG. 10B, a position of any one 800b of the grouped graphic objects 800b and 800c output to a region of the display unit 151 may be moved through a drag input. In this case, when the graphic object is moved to a selection region, the graphic object 800b may be selected. For example, the selection region of the graphic object 800b may be an upper region of the display unit 151.

In another example, as illustrated in (c) of FIG. 10B, any one 800c of the graphic objects output to a region of the display unit 151 may be moved to a deletion region through a drag input.

When the selecting of the grouped graphic objects is completed, as illustrated in (d) of FIG. 10B, only the selected graphic objects may be output to the display unit 151.

Hereinbefore, the method for controlling grouped graphic objects has been described. The user may group only desired graphic objects among a plurality of graphic objects, and edit only the grouped graphic object.

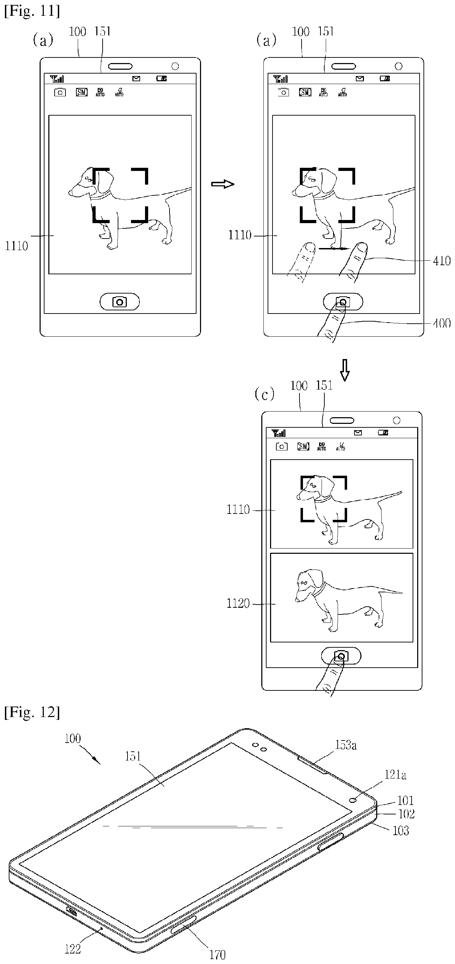

Hereinafter, a case in which a multi-touch input is applied while a camera application is being executed will be described. FIG. 11 is a conceptual view illustrating a case in which a multi-touch is applied while a camera application is being executed.

The user may execute a camera application to capture an image. For example, as illustrated in (a) of FIG. 11, the user may execute the camera application.

Thereafter, while the camera application is being executed, the user may apply a first touch to an image capture button. Also, in a state in which the first touch is maintained, the user may apply a second touch input to the display unit 151. For example, as illustrated in (b) of FIG. 11, in a state in which the user applies a long-touch input to the image capture button, the user may apply a flicking input to at least one region of the display unit 151.

In response to the second touch input, the controller 180 may output the most recently captured image 1120 to at least one region of the display unit.

In this case, referring to (c) of FIG. 11, the controller may divide the display unit into a plurality of regions. For example, the display unit 151 may be divided into a first region in which an image received from the camera is output and a second region in which an image which was captured before is output.

Hereinbefore, the method for controlling the display unit by using a multi-touch input while the camera application is being executed has been described. In this manner, while capturing images by using the camera, the user may compare a currently captured image with a previously captured image.

Meanwhile, the entire front surface of the mobile terminal according to an illustration example may be configured as the display unit 151. For example, referring to FIG. 12, unlike the mobile terminal illustrated in FIG. 2, the mobile terminal according to an illustration example may not include the user input unit 131 in the front surface of the mobile terminal. Instead, the display unit 151 may be present in the position of the user input unit 131.

Thus, in the case of the mobile terminal without the user input unit 131, screen information having a function of the user input unit 131 may be output to the region corresponding to the region in which the user input unit 131 is positioned. Thus, the user may use the function of the user input unit 131 by using the screen information output to the display unit, even without the user input unit 131.

Hereinafter, it is assumed that the mobile terminal is configured such that the entire front surface thereof is configured as the display unit 151, without the user input unit 131.

The mobile terminal according to an illustration example may output a plurality of function keys associated with operations of the mobile terminal to the display unit (S1310).

The operations of the mobile terminal may be any operation that can be executed in the mobile terminal such as an operation of executing an application, an operation of outputting a home screen, an operation of setting a system, and the like.

Here, the plurality of function keys associated with the operations of the mobile terminal may be output to at least a portion of the display unit. In this case, functions associated with operations of the mobile terminal may be matched to the plurality of function keys. For example, the functions associated with operations of the mobile terminal may include a function of canceling an operation executed in the mobile terminal, a function of returning to a home screen of the mobile terminal, a function of entering a system set-up of the mobile terminal, and the like.

Meanwhile, in a case in which a certain application is currently executed in the mobile terminal, function keys corresponding to the executed application may displayed on the display unit. For example, when a Web browser application is executed in the mobile terminal, function keys related to the Web browser may be displayed. For example, the function related to the Web browser may be a function of returning to a previous screen of a currently output screen.

Thereafter, when a first touch is applied to any one of the plurality of function keys, the mobile terminal according to an illustration example may output information related to the any one function key to a region of the display unit (S1320).

In the mobile terminal according to an illustration example, the plurality of function may be output to the display unit. In this case, the user may apply a touch input to the plurality of functions to execute functions corresponding to the plurality of function keys.

Meanwhile, the plurality of function keys may be matched to different functions according to types of touch input. For example, when a short-touch input is applied to the plurality of function keys, a basic function of the plurality of function keys may be executed. Here, the basic function may refer to an intrinsic function of the plurality of function keys.

Here, when a long-touch input, different from the short-touch input, is applied to the plurality of function keys, information related to the plurality of function keys may be output. The information related to the plurality of function keys may be information related to the basic function. For example, when the basic function is a function of returning to an immediately previous function of a currently executed function, the related information may be a list of functions which have been executed previously. In another example, when the basic function is a function of outputting addresses of Web sites that the user frequently visits, the related information may be a list of the addresses of the Web sites that the user frequently visits. In another example, in a case in which the basic function is a function of returning to the home screen, the related information may be a list of applications currently executed in the mobile terminal.

When a first touch is applied to any one of the plurality of function keys, information related to the any one function key may be output to a region of the display unit. In this case, the related information may be output to the screen currently output to the display unit 151 in an overlapping manner. Also, the related information may be output to a region of the display unit, so that it may be output together with other information that may be output to the display unit 151.

In a state in which the first touch is maintained, the mobile terminal according to an illustration example may execute a function corresponding to the output information in response to a second touch, different from the first touch, applied to the output information (S1230).

The mobile terminal according to an illustration example may further include a sensing unit for sensing at least two touch inputs simultaneously. In this case, as discussed above, the at least two touch inputs may be a multi-touch input.

In a state in which the first touch applied to the display unit 151 is continuously sensed, when a second touch is applied to the related information, the controller 180 may execute a function corresponding to the information to which the second touch has been applied.

The function corresponding to the information to which the second touch has been applied may be a function of executing an application corresponding to the information. For example, in a case in which the information to which the second touch has been applied is an address of a Web site that the user frequently visits (e.g., a favorite address), the mobile terminal may access the Web site indicated by the information. In this case, the display unit 151 may output an executed screen of the accessed Web site.

Here, the second touch may be a pre-set type touch input. For example, the second touch may be an input of dragging the output information. The drag input may be an input of moving in various directions such as in a downward direction, in an upward direction, in a rightward direction, in a leftward direction, in a diagonal direction, and the like.

Meanwhile, different functions may be executed according to a direction of the second touch. For example, in a case in which the second touch is a drag input of moving the output information in a downward direction, a function of deleting the output information may be executed.

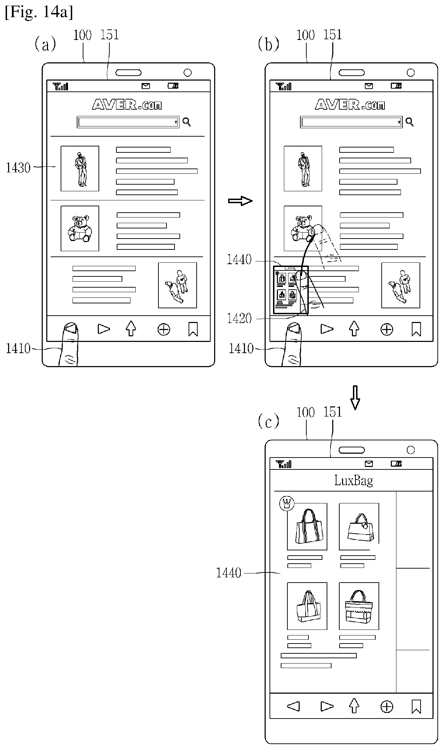

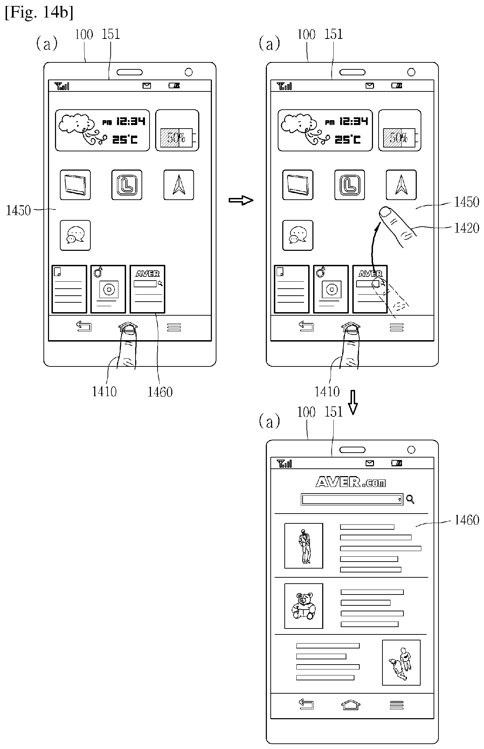

The control method will be described in more detail with reference to FIGS. 14A and 14B. Referring to (a) of FIG. 14A, a Web browser application may be executed in the mobile terminal according to an illustration example.

In the case in which the Web browser application is executed (1430), a plurality of function keys associated with the mobile terminal may have a function related to the Web browser application. For example, the function related to the Web browser application may be a function of returning to a previous screen of a current screen, a function of going to a next screen of a current screen, a function of returning to a home, a function of adding a new window, a bookmark function, and the like.

Here, the user may apply a first touch 1410 to any one of the plurality of function keys. The first touch 1410 may be various types of touch such as a long touch, a double touch, flicking, and the like. For example, as illustrated in (a) of FIG. 14A, the first touch 1410 may be a long touch. For example, the key to which the first user applies the first touch 1410 may be a function key of returning to a previous screen among the plurality of function keys.

In a state in which the first touch is maintained, referring to (b) of FIG. 14A, information 1440 related to the first touch may be output. In this case, the information 1440 may be output in various manners. For example, the information 1440 may be output to screen information, which is currently output to the display unit 151, in an overlapping manner. Also, the information 1440 may be output to a region adjacent to a region to which the plurality of function keys are output. In addition, the information 1440 may be output in the form of a thumbnail image.

As illustrated in (b) of FIG. 14A, when the information 1440 is output, the user may apply a second touch different from the first touch to the information in a state in which the first touch is maintained. For example, the second touch may be a drag input different from the long touch. The drag input may be an input of moving the output information 1440 to the center of the display unit 151.

In the case in which the second touch is applied, the controller 180 may execute a function corresponding to the second touch. For example, referring to (c) of FIG. 14A, in the case in which the second touch is applied, the controller 180 may execute an application corresponding to the information to which the second touch has been applied. For example, in a case in which the information to which the second touch has been applied is an address of a Web browser, the controller 180 may access the Web browser. In this case, an executed screen 1440 of the accessed Web browser may be output to the display unit 151.

In another illustration example, referring to (a) of FIG. 14B, a home screen page 1450 may be output to the display unit 151. In this case, the plurality of function keys associated with the mobile terminal may include a function key of canceling a currently executed function, a function key of entering the home screen page, a function key of setting up a system of the mobile terminal, and the like.

In an illustration example, as illustrated in (a) of FIG. 14B, the user may apply a first touch 1410 to the key for entering the home screen page among the plurality of function keys. In this case, in response to the first touch 1410, the controller 180 may output information related to the key for entering the home screen page. For example, referring to (a) of FIG. 14B, the function related to the home screen page may be a list of applications currently executed in the mobile terminal.

Referring to (b) of FIG. 14B, in a state in which a list of applications is output, the user may apply a second touch 1420 to any one of items on the list. In this case, the second touch 1420 may be a type of touch input different from that of the first touch 1410. For example, the second touch 1420 may be a drag input for moving any one item to a central portion of the display unit 151.

Referring to (c) of FIG. 14B, in the case in which the second touch is applied, the controller 180 may execute a function corresponding to the any one item 1460. For example, in a case in which the any one item corresponds to a Web browser application, the controller 180 may execute the Web browser application.

Hereinbefore, the case in which when a first touch is applied to any one of the plurality of function keys, information related to the any one key is output, and in a state in which the first touch is maintained, when a second touch different from the first touch is applied to the output information, a function corresponding to the information to which the second touch has been applied is executed has been described. In the mobile terminal in which the entire front surface thereof is configured as the display unit, by outputting the plurality of function keys associated with operations of the mobile terminal to one region of the display unit, the method of using the plurality of function keys by associating them to screen information output to the display unit may be provided.

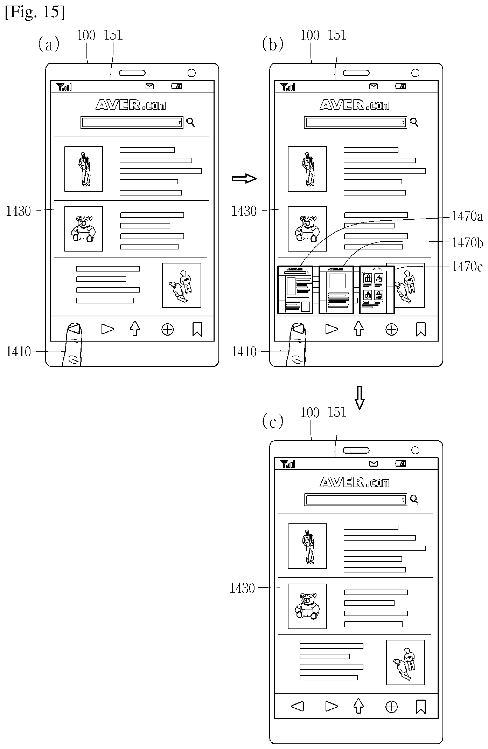

Hereinafter, whether to output information related to a function key to which a first touch has been applied according to whether the first touch input is maintained will be described. FIG. 15 is a conceptual view illustrating whether to output information according to whether a first touch is maintained.

The user may apply a first touch 1410 to any one of the plurality of function keys. When the first touch 1410 is applied, the controller 180 may output information related to the function key to which the first touch 1410 has been applied. For example, referring to (a) of FIG. 15, the plurality of function keys may include a function of returning to a previous screen of a current screen, a function of going to a next screen of a current screen, a function of returning to a home, a function of adding a new window, a bookmark function, and the like. In this case, as illustrated in (a) of FIG. 15, the user may apply a first touch 1410 to the function key of returning to a previous screen of the current screen.

When the first touch 1410 is applied, the controller 180 may output information related to the function key, namely, the function key of returning to a previous screen of the current screen 1430. In this case, the related information may be a plurality of Web browser information that the user accessed previously. The Web browser information may be output in various manners. For example, referring to (b) of FIG. 15, the Web browser information 1470a, 1470b, and 1470c may be output in thumbnail manner.

In this case, the user may not apply the first touch. When the first touch is not sensed any longer, referring to (c) of FIG. 15, the controller 180 may not output the information related to the function key any longer.

Hereinbefore, the method of outputting information related to the function key only in the state in which the first touch is maintained has been described. In this manner, the user may output information only in the state in which the first touch is applied.

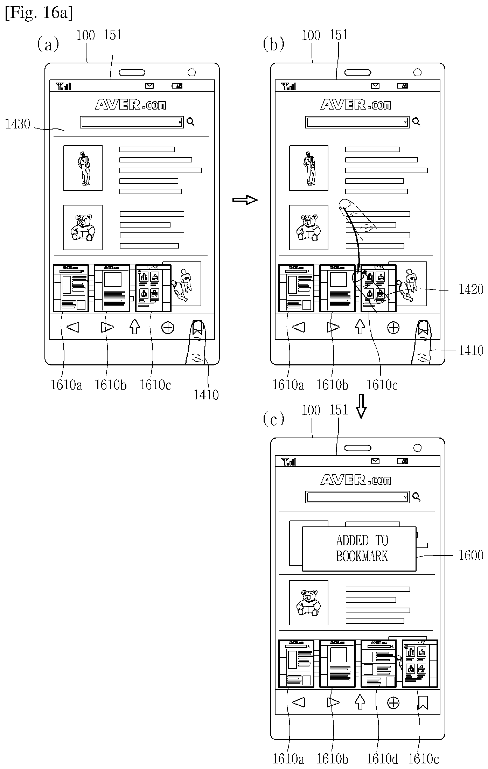

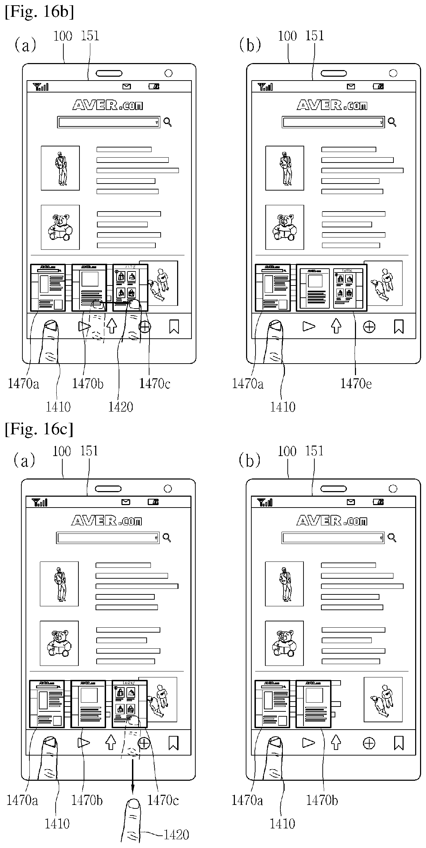

Hereinafter, executing different functions according to types of second touch will be described. FIGS. 16A, 16B, and 16C are conceptual views illustrating a method for editing output information by using a second touch.

In the mobile terminal according to an illustration example, various functions may be matched to a type of touch in advance. For example, functions such as adding, deleting, position-changing, grouping, and the like, of output information may be matched in advance according to a type of the second touch.

In an illustration example, referring to FIG. 16A, a Web browser application may be executed in the mobile terminal. Here, referring to (a) of FIG. 16A, a plurality of function keys may be output to a region of the display unit 151. For example, the plurality of function keys may include a function of returning to a previous screen of a current screen, a function of moving to a next screen of the current screen, a function of returning to a home screen, a function of adding a new window, a bookmark function, and the like. In this case, the user may apply a first touch 1410 to any one of the plurality of function keys. For example, the user may apply the first touch 1410 to a function key having the bookmark function.

In response to the first touch, the controller 180 may output information 1610a,
1610b, and 1610c related to the function key to which the first touch 1410 has been applied. The information 1610a, 1610b, and 1610c related to the function key to which the first touch 1410 has been applied may be information related to the bookmark function. For example, the information related to the bookmark function may include a plurality of previously stored bookmark Web browser address lists 1610a, 1610b, and 1610c.

In this case, in a state in which the first touch is maintained, the user may apply a second touch to the Web browser page currently output to the display unit 151. When the second touch is applied, the controller 180 may execute a function previously matched to the information related to the function key to which the first touch has been applied. For example, the controller 180 may add an item to the information list related to the function key to which the first touch has been applied.

For example, as illustrated in (b) of FIG. 16A, the user may apply an input of dragging a page currently output to the display unit 151 to the regions 1610a, 1610b, and 1610c to which the information related to the bookmark function. Thereafter, referring to (c) of FIG. 16A, in response to the applied second touch, the controller may execute a function matched to the second touch. For example, the previously matched function may be a function of adding a current Web browser address to bookmark. In an illustration example, as illustrated in (c) of FIG. 16A, the controller 180 may add 1610d the currently output Web browser page to the bookmark Web browser address list. In addition, as illustrated in (c) of FIG. 16A, when the currently output Web browser page is added to the Web browser address list, the controller 180 may output notification information 1600 indicating the addition of the page to the Web browser list.

Also, the second touch may correspond to a function of grouping the output information. In an illustration example, referring to FIG. 16B, a function of grouping the output information may be matched to the second touch.

For example, as illustrated in (a) of FIG. 16B, when the first touch 1410 applied to any one of the plurality of function keys is held (or continues), the controller 180 may output information related to the any one function to one region of the display unit 151 For example, the any one function key may be a function key of returning from a current screen to a previous screen. In this case, the information related to the any one function key may be the Web browser address list which the user has accessed previously.

In this case, when a second touch applied to a certain item of the Web browser address list is sensed, the controller 180 may execute a function previously matched to the second touch 1420. For example, the second touch may be a drag input of moving any one of the output information to a region in which the other has been output. In this case, the function previously matched to the second touch 1420 may be a function of grouping the item to which the second touch has been applied.

For example, as illustrated in (a) of FIG. 16B, an input of dragging any one item of the Web browser address list to a different item may be applied. The controller 810 may group 1470e the any one and the other information and output the same. For example, as illustrated in (b) of FIG. 16B, the controller 180 may group 1470e the any one item to which the second touch 1420 has been applied and the other item and output the same.

Also, the second touch 1420 may correspond to a function of deleting any one of the output information. In an exemplary embodiment of the present disclosure, referring to FIG. 16C, a function of deleting information to which the second touch 1420, among the output information, is applied may have been matched to the second touch 1420.

For example, as illustrated in (a) of FIG. 16C, in a case in which the first touch 1410 is applied to the function key of returning to a previous page of a current page, the controller 180 may output the Web browser page lists 1470a, 1470b, and 1470c which have been accessed before the current page.

In this case, a second touch may be applied to any one 1470c of the Web browser page lists 1470a, 1470b, and 1470c. For example, the second touch 1420 may be an input of dragging the any one Web browser page 1470c such that it faces downwardly in the display unit 151. In this case, as illustrated in (c) of FIG. 16C, the controller 180 may not output the any one Web browser page 1470c to the display unit 151.

Hereinbefore, the method for editing the output information by using the second touch has been described. In this manner, the user may edit information only by applying a touch conveniently.

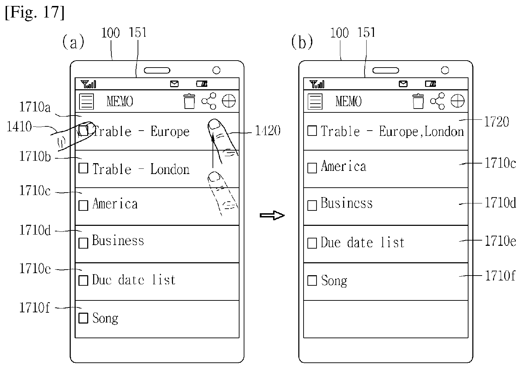

Hereinafter, a method for controlling output information of the display unit by using a multi-touch input will be described. In FIG. 17, a method for editing a stored memo by using a multi-touch in the mobile terminal in which a memo application is being executed will be described.

The controller 180 may perform various types of controlling by using a multi-touch input applied to the display unit 151. In an illustration example, the controller 180 may execute a function of merging pieces of information by using the multi-touch input.

For example, referring to (a) of FIG. 17, a memory list 1710a, 1710b, 1710c, 1710d, 1710e, and 17 IOf stored in a memo application may be output to the display unit 151. In this case, in order to store similar memos among the memos, the user may use a multi-touch input. In an illustration example, the controller 180 may sense a first touch 1410 applied to any one item 1710a in the memo list output to the display unit 151. In this case, the first touch 1410 may be a long touch. In a state in which the sensing of the first touch 1410 is maintained, the controller 180 may sense a second touch 1420 applied to an item 1710b different from the any one item. In this case, the second touch 1420 may be a drag touch. Meanwhile, the second touch 1420 may be a drag input to move the item 1710b to any one item to which the first touch 1410 is applied.

In the case in which the multi-touch input is sensed, the controller 180 may execute a function previously matched to the multi-touch input. For example, as illustrated in (b) of FIG. 17, the controller 180 may merge the item to which the first touch is applied and the item to which the second touch is applied, and store the same (1720).

Hereinabove, the method for editing information by using a multi-touch has been described. In this manner, the user may edit information through only a touch, without having to enter an editing mode.

In the exemplary embodiments of the present invention, the foregoing method may be implemented as codes that can be read by a processor in a program-recorded medium. The processor-readable medium may include a ROM, a RAM, a CD-ROM, a magnetic tape, a floppy disk, an optical data storage device, and the like. The processor-readable medium also includes implementations in the form of carrier waves (e.g., transmission via the Internet).

The mobile terminal according to the embodiments of the present disclosure is not limited in its application of the configurations and methods, but the entirety or a portion of the embodiments can be selectively combined to be configured into various modifications.

## Claims

1. A mobile terminal comprising:
a touch screen (151) configured to output a graphic object (700a) and sense a touch input;
a controller (180) configured to,
when a first touch input (400) applied to the touch screen (151) and a second touch input (410) different from the first touch input (400) are sensed in a state in which the first touch input (400) is maintained, output a different graphic object (430) related to the graphic object (420) maintained to be output to at least one region of the touch screen (151), in response to the second touch input (410) in a state in which output of the graphic object (420) to the region to which the first touch input (400) has been applied is maintained,
wherein when the first and second touch inputs (400, 410) are sensed, the controller (180) is configured to divide the touch screen (151) into a plurality of regions (151a, 151b), and
the graphic object (420), which has been output to the region (151a) to which the first touch input (400) has been applied, is output to a first region (151a) among the plurality of regions and
the different graphic object (430) is output to a second region (151b) among the plurality of regions,
**characterized in that** the controller (180) is further configured to
receive a touch input applied to one region (700a) of the first region (151a) for magnifying the one region (700a) of the first region (151a);
magnify the graphic object (420) output to the one region (700a) of the first region (151a) and the different graphic object (430) output to another region (700b) of the second region (151b),
wherein the another region (700b) of the second region (151b) corresponds to the one region (700a) of the first region (151a);
recognize at least one differing image region, which differs in the magnified one region (700a) from the magnified another region (700b); and
when the at least one differing image region is recognized, output notification information (710a) to the graphic object (420) and the different graphic object (430) indicating the at least one differing image region.

2. The mobile terminal of claim 1, wherein when the second touch input (410) is applied again to the touch screen (151), a graphic object different from the graphic object output to the second region is output to the second region in response to the second touch input which has been applied again.

3. The mobile terminal of claim 1, wherein the first and second touch inputs are different types of touch input, and
after the touch screen (151) is divided into a plurality of regions (151a, 151b) on the basis of the sensed first and second touch inputs (400, 410),
when the second touch input (410) is applied to the first region (151a) in a state in which the first touch input (400) has been applied to the second region (151b), the graphic object (430) output to the second region (151b) is maintained to be output by the first touch input (400) and
the graphic object (420) output to the first region (151a) is changed to a different graphic object related to the graphic object (430) output to the second region (151b).

4. The mobile terminal of claim 1, wherein the touch screen (151) comprises a plurality of graphic objects, and
the controller (180) is configured to:
fix an output position of the graphic object to which the first touch input is applied, among the plurality of graphic objects on the basis of the applied first and second touch inputs, and
change an output position of a graphic object, excluding the graphic object whose output position is fixed, on the basis of the applied second touch input.

5. The mobile terminal of claim 4, wherein when the output position of the graphic object is changed according to the second touch input, the controller (180) is configured to:
make at least one of the plurality of graphic objects output to the touch screen disappear from the touch screen (151), and
output at least one new graphic object which has not been output to the touch screen (151) in response to the disappearance of the at least one graphic object.

6. The mobile terminal of claim 1, wherein the graphic objects are provided as plural, and
the controller (180) is configured to:
set at least two graphic objects, among the plurality of graphic objects as a group according to a user selection, and
output the graphic objects included in the set group among the plurality of objects to the touch screen (151).

## Patentansprüche

1. Mobiles Endgerät, mit:
einem Berührungsbildschirm (151), der dazu eingerichtet ist, ein graphisches Objekt (700a) auszugeben und eine Berührungseingabe zu erfassen,
einer Steuereinheit (180), die eingerichtet ist zum
wenn eine auf den Berührungsbildschirm (151) ausgeübte erste Berührungseingabe (400) und eine von der ersten Berührungseingabe (400) verschiedene zweite Berührungseingabe (410) in einem Zustand erfasst werden, in dem die erste Berührungseingabe (400) beibehalten wird, Ausgeben eines anderen graphischen Objekts (430), welches mit dem graphischen Objekt (420) in Beziehung steht, dessen Ausgabe auf zumindest einen Bereich des Berührungsbildschirms (151) beibehalten wird, in Reaktion auf die zweite Berührungseingabe (410) in einem Zustand, in dem eine Ausgabe des graphischen Objekts (420) in dem Bereich, auf den die erste Berührungseingabe (400) ausgeübt worden ist, beibehalten wird,
wobei dann, wenn die erste und zweite Berührungseingabe (400, 410) erfasst werden, die Steuereinheit (180) dazu eingerichtet ist, den Berührungsbildschirm (151) in mehrere Bereiche (151a, 151b) zu unterteilen, und
das graphische Objekt (420), welches in den Bereich (151a) ausgegeben worden ist, auf den die erste Berührungseingabe (400) ausgeübt worden ist, in einem ersten Bereich (151a) aus den mehreren Bereichen ausgegeben wird, und
das andere graphische Objekt (420) in einem zweiten Bereich (151b) aus den mehreren Bereichen ausgegeben wird,
**dadurch gekennzeichnet, dass** die Steuereinheit (180) ferner eingerichtet ist zum
Empfangen einer auf eine Zone (700a) des ersten Bereichs (151a) ausgeübten Berührungseingabe zum Vergrößern der ersten Zone (700a) des ersten Bereichs (151a),
Vergrößern des in der einen Zone (700a) des ersten Bereichs (151a) ausgegebenen graphischen Objekts (420) und des in einer anderen Zone (700b) des zweiten Bereichs (151b) ausgegebenen, anderen graphischen Objekts (430),
wobei die andere Zone (700b) des zweiten Bereichs (151b) der einen Zone (700a) des ersten Bereichs (151a) entspricht,
Erkennen zumindest eines sich unterscheidenden Bildbereichs, der sich in der vergrößerten einen Zone (700a) von der vergrößerten anderen Zone (700b) unterscheidet, und
wenn der zumindest eine sich unterscheidende Bildbereich erkannt ist, Ausgeben einer Benachrichtigungsinformation (710a) an das graphische Objekt (420) und das andere graphische Objekt (430), welche den zumindest einen sich unterscheidenden Bildbereich angibt.

2. Mobile Endgerät nach Anspruch 1, bei dem dann, wenn die zweite Berührungseingabe (410) erneut auf den Berührungsbildschirm (151) ausgeübt wird, in Reaktion auf die erneut ausgeübte zweite Berührungseingabe ein graphisches Objekt in dem zweiten Bereich ausgegeben wird, das sich von dem in dem zweiten Bereich ausgegebenen graphischen Objekt unterscheidet.

3. Mobiles Endgerät nach Anspruch 1, wobei die erste und zweite Berührungseingabe verschiedene Arten von Berührungseingaben sind, und
nachdem basierend auf den erfassten ersten und zweiten Berührungseingaben (400, 410) der Berührungsbildschirm (151) in mehrere Bereiche (151a, 151b) unterteilt worden ist,
das in dem zweiten Bereich (151b) ausgegebene graphische Objekt (430) weiterhin durch die erste Berührungseingabe (400) ausgegeben wird, wenn die zweite Berührungseingabe (410) auf den ersten Bereich (151a) in einem Zustand ausgeübt wird, in dem die erste Berührungseingabe (400) auf den zweiten Bereich (151b) ausgeübt worden ist, und
das in dem ersten Bereich (151a) ausgegebene graphische Objekt (420) in ein anderes graphisches Objekt geändert wird, welches mit dem graphischen Objekt (430) in Beziehung steht, welches in den zweiten Bereich (151b) ausgegeben wird.

4. Mobiles Endgerät nach Anspruch 1, bei dem der Berührungsbildschirm (151) mehrere graphische Objekte umfasst, und
die Steuereinheit (180) eingerichtet ist zum:
Fixieren einer Ausgabeposition des graphischen Objekts, auf das die erste Berührungseingabe ausgeübt wird, unter den mehreren graphischen Objekten basierend auf den ausgeübten ersten und zweiten Berührungseingaben, und
Ändern einer Ausgabeposition eines graphischen Objekts abgesehen von dem graphischen Objekt, dessen Ausgabeposition fixiert ist, auf der Basis der ausgeübten zweiten Berührungseingabe.

5. Mobiles Endgerät nach Anspruch 4, bei dem dann, wenn die Ausgabeposition des graphischen Objekts entsprechend der zweiten Berührungseingabe geändert wird, die Steuereinheit (180) eingerichtet ist zum:
Verschwindenlassen zumindest eines der mehreren auf den Berührungsbildschirm ausgegebenen graphischen Objekte von dem Berührungsbildschirm (151), und
Ausgeben zumindest eines neuen graphischen Objekts, das nicht auf den Berührungsbildschirm (151) ausgegeben worden ist, in Reaktion auf das Verschwinden des zumindest einen graphischen Objekts.

6. Mobiles Endgerät nach Anspruch 1, bei dem die graphischen Objekte in Mehrzahl vorhanden sind und
die Steuereinheit (180) eingerichtet ist zum:
Einstellen zumindest zweier graphischer Objekte aus den mehreren graphischen Objekten als eine Gruppe entsprechend einer Benutzerauswahl, und
Ausgeben der in der eingestellten Gruppe enthaltenen graphischen Objekte aus den mehreren Objekten auf dem Berührungsbildschirm (151).

## Revendications

1. Terminal mobile comprenant:
un écran tactile (151) conçu pour afficher un objet graphique (700a) et détecter une entrée tactile;
un organe de commande (180) conçu pour,
lorsqu'une première entrée tactile (400) appliquée à l'écran tactile (151) et une seconde entrée tactile (410) différente de la première entrée tactile (400) sont détectées dans un état dans lequel est conservée la première entrée tactile (400), afficher un objet graphique différent (430) par rapport à l'objet graphique (420) conservé pour être affiché dans au moins une zone de l'écran tactile (151), en réponse à la seconde entrée tactile (410) dans un état dans lequel l'affichage de l'objet graphique (420) dans la région dans laquelle la première entrée tactile (400) a été appliquée, est conservée,
lorsque les première et seconde entrées tactiles (400, 410) sont détectées, l'organe de commande (180) étant conçue pour diviser l'écran tactile (151) en une pluralité de zones (151a, 151b), et
l'objet graphique (420), qui a été affiché dans la zone (151a) à laquelle a été appliquée la première entrée tactile (400), étant affichée dans une première zone (151a) parmi la pluralité de zones et
l'objet graphique différent (430) étant affiché dans une seconde zone (151b) parmi la pluralité de zones,
**caractérisé en ce que** l'organe de commande (180) étant en outre conçu pour
recevoir une entrée tactile appliquée à une zone (700a) de la première région (151a) destinée à agrandir la zone (700a) de la première zone (151a);
agrandir l'objet graphique (420) affiché dans la zone (700a) de la première zone (151a) et l'objet graphique différent (430) affiché dans l'autre zone (700b) de la seconde région (151b),
l'autre zone (700b) de la seconde zone (151b) correspondant à la zone (700a) de la première zone (151a);
reconnaître au moins une zone d'image différente qui diffère dans la zone agrandie (700a) de l'autre zone agrandie (700b); et
lorsque ladite zone d'image différente est reconnue, délivrer des informations de notification (710a) à l'objet graphique (420) et l'objet graphique différent (430) indiquant ladite zone d'image différente.

2. Terminal mobile selon la revendication 1, la seconde entrée tactile (410) étant appliquée de nouveau à l'écran tactile (151), un objet graphique différent de l'objet graphique affiché dans la seconde zone étant affiché dans la seconde zone en réponse à la seconde entrée tactile qui a été de nouveau appliquée.

3. Terminal mobile selon la revendication 1, les première et seconde entrées tactiles étant différents types d'entrée tactile et
après que l'écran tactile (151) a été divisé en une pluralité de zones (151a, 151b) sur la base des première et seconde entrées tactiles détectées (400, 410),
lorsque la seconde entrée tactile (410) est appliquée à la première zone (151a) dans un état dans lequel a été appliquée la première entrée tactile (400) à la seconde zone (151ab), l'objet graphique (430) affiché dans la seconde zone (151b) est conservé pour être affiché par la première entrée tactile (400) et
l'objet graphique (420) affiché dans la première zone (151a) étant modifié en un objet graphique différent relatif à l'objet graphique (430) affiché dans la seconde zone (151b).

4. Terminal mobile selon la revendication 1, l'écran tactile (151) comprenant une pluralité d'objets graphiques, et
l'organe de commande (180) étant conçu pour:
fixer une position d'affichage de l'objet graphique auquel la première entrée tactile est appliquée, parmi la pluralité d'objets graphiques sur la base des premières et secondes entrées tactiles, et
modifier une position d'affichage d'un objet graphique, excluant l'objet graphique dont la position d'affichage est fixée, sur la base de la seconde entrée tactile appliquée.

5. Terminal mobile selon la revendication 4, lorsque la position d'affichage de l'objet graphique est modifiée selon la seconde entrée tactile, l'organe de commande (180) étant conçu pour:
amener au moins un objet graphique de la pluralité d'objets graphiques affichés dans l'écran tactile à disparaître de l'écran tactile (151), et
afficher au moins un nouvel objet graphique qui n'a pas été affiché dans l'écran tactile (151) en réponse à la disparition dudit objet graphique.

6. Terminal mobile selon la revendication 1, les objets graphiques étant plusieurs, et
l'organe de commande (180) étant conçu pour:
définir au moins deux objets graphiques, parmi la pluralité d'objets graphiques comme un groupe selon une sélection d'utilisateur, et
afficher les objets graphiques compris dans le groupe défini parmi la pluralité d'objets dans l'écran tactile (151).
